# EUROPEAN PATENT SPECIFICATION

(11) **EP 2 473 279 B1**
(45) Date of publication and mention of the grant of the patent: **02.04.2014**
(21) Application number: 10745278.1
(22) Date of filing: 26.08.2010
(51) Int. Cl.: B01J 31/22, C08C 19/02, C08C 19/08, C08L 9/02, C08L 15/00, C08K 5/14

(54) **Metathesis of a nitrile rubber in the presence of a transition metal catalyst**
Metathese eines Nitrilkautschuks in Gegenwart von Übergangsmetallkatalysatoren
Métathèse de caoutchoucs de nitrile en présence de catalyseurs de métal de transition

(30) Priority: 31.08.2009 EP 09169070; 31.08.2009 EP 09169072; 11.09.2009 EP 09170111; 23.02.2010 EP 10154429
(43) Date of publication of application: 11.07.2012
(73) Proprietor: LANXESS Deutschland GmbH, 50569 Köln (DE)
(72) Inventor: SODDEMANN, Matthias, 51503 Rösrath (DE); ONG, Christopher, Orange Texas TX 77632 (US); MÜLLER, Julia, Maria, 5133 Gilgenberg (AT); KÖNIG, Thomas, 51375 Leverkusen (DE); KULBABA, Kevin, 51375 Leverkusen (DE)
(86) International application number: PCT/EP2010/062492
(87) International publication number: WO 2011/023771

(56) References cited:
- EP-A1- 1 770 119
- EP-A1- 2 027 920
- EP-A1- 2 028 194
- EP-A1- 2 030 988
- EP-A2- 1 621 577
- EP-A2- 1 760 093
- EP-A2- 1 826 220
- EP-A2- 1 894 946
- EP-A2- 2 027 919
- WO-A1-2005/080456
- US-A- 5 208 294

## Description

### FIELD OF THE INVENTION

The present invention relates to a vulcanizable polymer composition comprising at least one very low molecular weight optionally hydrogenated nitrile rubber, at least one cross-linking agent, optionally at least one filler, and optionally further auxiliary products used for rubber compounds, a process for vulcanizing such polymer composition and the vulcanizate obtainable by curing the vulcanizable polymer composition.

### BACKGROUND OF THE INVENTION

Nitrile rubber, commonly referred to as "NBR", is used as starting material for producing hydrogenated nitrile rubber, commonly referred to as "HNBR". Nitrile rubbers are copolymers of at least one unsaturated nitrile, at least one conjugated diene and optionally further copolymerizable comonomers. HNBR is typically prepared by the selective hydrogenation of NBR. The degree of hydrogenation of the copolymerized diene units is usually in the range from 50 to 100%.

NBR and HNBR are specialty rubbers with an attractive property profile. HNBR in particular has very good heat resistance, excellent ozone and chemical resistance, and excellent oil resistance. Coupled with the high level of mechanical properties of the rubber (in particular the high resistance to abrasion) it is not surprising that HNBR as well as NBR have found widespread use in the automotive (seals, hoses, bearing pads), oil (stators, well head seals, valve plates), electrical (cable sheathing), mechanical engineering (wheels, rollers) and shipbuilding (pipe seals, couplings) industries.

Many of the commercially available HNBR grades have a Mooney viscosity (ML 1+4 at 100°C) in the range from 55 to 120, which corresponds to a number average molecular weight Mₙ (method of determination: gel permeation chromatography (GPC) against polystyrene equivalents) in the range from about 200 000 to 700 000. The polydispersity index PDI (PDI = M_{w}/Mₙ, where M_{w} is the weight average molecular weight and Mₙ is the number average molecular weight), which gives information about the breadth of the molecular weight distribution, is frequently greater than 3. The residual double bond content is usually in the range from 1 to 18% (determined by IR spectroscopy).

The processability of NBR and HNBR is subject to severe restrictions as a result of the relatively high Mooney viscosity. For many applications, it is desirable to have NBR or HNBR grades which have a lower molecular weight and thus a lower Mooney viscosity, especially liquid NBR or HNBR grades. This would decisively improve the processability.

In particular for HNBR numerous attempts have been made in the past to reduce the molecular weight of the polymer, i.e. to shorten the chain length of HNBR by degradation. For example, the molecular weight can be decreased by thermo mechanical treatment (mastication, i.e. mechanical breakdown), e.g. on a roll mill or in a screw apparatus (EP-A-0 419 952). However, this thermo mechanical degradation has the disadvantage that functional groups such as hydroxyl, keto, carboxyl and ester groups, are incorporated into the molecule as a result of partial oxidation and, in addition, the microstructure of the polymer is substantially altered. This results in disadvantageous changes in the properties of the polymer. In addition, these types of approaches, by their very nature, produce polymers having a broad molecular weight distribution.

A hydrogenated nitrile rubber having a low Mooney viscosity and improved processability, but which has the same microstructure as those rubbers which are currently available, is difficult to manufacture using current technologies. The hydrogenation of NBR to produce HNBR results in an increase in the Mooney viscosity of the raw polymer. This Mooney Increase Ratio (MIR) is generally around 2 or even higher than 2, depending upon the polymer grade, hydrogenation level and nature of the feedstock. Furthermore, limitations associated with the production of NBR itself dictate the low viscosity range for the HNBR feedstock.

In WO-A-02/100905**,** WO-A-02/100941**,** and WO-A-2003/002613 a low-Mooney HNBR is disclosed as well as a method for producing said low-Mooney HNBR. Such method comprises degradation by subjecting starting nitrile rubbers to olefin metathesis and subsequent hydrogenation. The starting nitrile rubber is reacted in a first step in the optional presence of a co-olefin and a specific catalyst based on osmium, ruthenium, molybdenum or tungsten complexes and hydrogenated in a second step. The hydrogenated nitrile rubbers obtained typically have a weight average molecular weight (Mw) in the range from 30,000 to 250,000, a Mooney viscosity (ML 1+4 at 100°C) in the range from 3 to 50 and a polydispersity index PDI of less than 2.5 can be obtained by this route according to WO-A-02/100941**.**

In WO-A-03/002613 a nitrile rubber having a molecular weight (M_{w}) in the range of from 25,000 to 200,000 g/mol, a Mooney viscosity (ML 1+4 at 100°C) of less than 25, and a MWD (or polydispersity index, PDI) of less than 2.5 is disclosed. The low molecular weight nitrile rubber having a narrow molecular weight distribution is prepared in the presence of at least one co-olefin and at least one known metathesis catalyst. According to the examples in WO-A-03/002613 bis(tricyclohexylphosphine)benzylidene ruthenium dichloride (Grubb's metathesis catalyst) is used and the molecular weight (M_{w}) of the NBR obtained after metathesis is in the range of from 54,000 to 180,000. The polydisdersity index is from 2.0 to 2.5.

EP-A-2 027 919 discloses catalyst systems and their application for the catalysis of metathesis reactions, preferably for the metatheses of nitrile rubber. The hydrogenated nitrile rubbers obtained have a weight average molecular weight (Mw) in the range from 11,300 to 186,000 and a polydispersity index PDI of less than 3.1.

In EP-A-2 030 988 a process for the degradation of the molecular weight of nitrile rubber via metatheses in presence of special catalyst systems is disclosed. The hydrogenated nitrile rubbers obtained typically have a weight average molecular weight (Mw) in the range from 12,000 to 204,000 and a polydispersity index PDI of less than 2.3.

In EP-A-2 028 194 a process for the metatheses degradation of nitrile rubbers is provided which uses specific transition metal complex catalysts showing an increased activity. The hydrogenated nitrile rubbers obtained have a weight average molecular weight (Mw) in the range from 36,000 to 240,000 and a polydispersity index PDI of less than 2.4 can be obtained by this route.

In EP-A-2 027 920 a transition metal-carbene-complex catalyst, its production and application as a catalyst for metathesis reactions, preferably for the metathesis of nitrile rubber, is disclosed. The hydrogenated nitrile rubbers which can be obtained by this route typically have a weight average molecular weight (Mw) in the range from 23,200 to 186,000 and a polydispersity index PDI of less than 3.1.

In EP-A-1 826 220 the application of special catalysts for the metathetic degradation of nitrile rubber is disclosed. The hydrogenated nitrile rubbers obtained by this route typically have a weight average molecular weight (Mw) in the range from 108,000 to 240.000 and a polydispersity index PDI of less than 2.4.

In EP-A-1 894 946 an improved process for the metathetic degradation of nitrile rubber in presence of a catalyst and a special additive is disclosed. The hydrogenated. nitrile rubbers obtained by this route typically have a weight average molecular weight (Mw) in the range from 55,000 to 240,000 and a polydispersity index PDI of less than 2.4.

In EP-A-1 760 093 a process is provided for the metatheses-degradation of nitrile rubber using ruthenium- or osmium-based catalysts simultaneously comprising a substituted imidazolidine ligands and a carbene ligand, comprising a phosphonium residue. The hydrogenated nitrile rubbers obtained by this route have a weight average molecular weight (Mw) in the range from 48.000 to 240,000 and a polydispersity index PDI of less than 2.4.

Nitrile rubbers having a weight average molecular weight Mw of 50,000 or less and a polydispersity index of less than 2.0 are already known from the above mentioned documents. However none of the documents provides any explicit or implicit disclosure which rubbers are suited to improve the heat build-up of cured compositions obtained from vulcanizable compositions based on such rubbers.

In US 2004/0123811 A1 a process for the production of (hydrogenated) nitrile rubber polymers by metathesis of nitrile butadiene rubber in the absence of a co-olefin, optionally followed by hydrogenation of the resulting metathesized NBR is disclosed. The resulting, optionally hydrogenated, nitrile rubber has a molecular weight M_{w} in the range of from 20,000 to 250,000, a Mooney viscosity (ML 1+4 at 100 deg. C) in the range of from 1 to 50, and a MWD (or polydispersity index, PDI) of less than 2.6. According to the examples in US 2004/0132891 A1 a Grubbs 2^{nd} generation catalyst is used and the molecular weight M_{w} of the NBR obtained after metathesis is in the range of from 119,000 to 185,000, the Mooney viscosity (ML 1+4 at 100° C) is 20 or 30 and the polydipersity index is 2.4 or 2.5.

In EP-A-1 621 577, EP-A-1 770 119 and US-A-5,208,294 vulcanizable mixtures based on HNBR with higher molecular weight and/or a higher polydispersity index are disclosed. These mixtures are told to be suited for different applications including seals, hoses, bearing pads, stators, well head seals, valve plates, cable sheeting, wheels, rollers, pipe seals, in place gaskets etc. Form parts as the aforementioned, however, if used in applications in which the articles are set under dynamical stress, are often subject to premature degradation due to the dynamical stress. Premature failure is manifested as heat build-up.

In WO-A1-2005/080456 a process for the preparation of low molecular weight hydrogenated nitrile rubber is disclosed, wherein the substrate NBR is simultaneously subjected to a metathesis reaction and a hydrogenation reaction. This reaction takes place in the presence of a known metathesis catalyst. The hydrogenated nitrile rubber produced has a molecular weight M_{w} in the range of from 20,000 to 250,000, a Mooney viscosity (ML 1+4 at 100°C) in the range of from 1 to 50 and a MWD (or polydispersity index, PDI) of less than 2.6. According the example in WO-A1-2005/080456 a Grubbs 2^{nd} generation catalyst is employed and the HNBR obtained has a molecular weight M_{w} of 178,000 and a PDI of 2.70.

None of the documents mentioned above discloses vulcanizable polymer compositions containing very low molecular weight liquid nitrile rubbers, the preparation and use thereof. Especially, none of the documents even discloses an effective process for the isolation of the very low molecular weight rubbers. Due to the low molecular weight of the rubber it is not advantageous to use standard isolation techniques such as coagulation with alcohols (methanol, isopropanol, ethanol etc.) or steam/water due to the extreme tackiness of the rubber which would result in lost product and lengthy finishing times.

Metathesis catalysts are known, inter alia, from WO-A-96/04289 **and** WO-A-97/06185**.** They have the following in-principle structure: 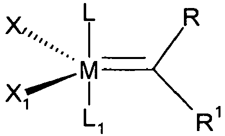 where M is osmium or ruthenium, R and R₁ are organic radicals having a wide range of structural variation, X and X₁ are anionic ligands and L and L₁ are uncharged electron donors. The customary term "anionic ligands" is used in the literature regarding such metathesis catalysts to describe ligands which are always negatively charged with a closed electron shell when regarded separately from the metal centre.

The metathesis reaction of the nitrile rubber is typically carried out in a suitable solvent which does not deactivate the catalyst used and also does not adversely affect the reaction in any other way. Preferred solvents include but are not restricted to dichloromethane, benzene, toluene, methyl ethyl ketone, acetone, tetrahydrofuran, tetrahydropyran, dioxane and cyclohexane. One of the preferred solvents is chlorobenzene.

### SUMMARY OF THE INVENTION

The present invention relates to a vulcanizable polymer composition comprising
(i) at least one optionally hydrogenated nitrile rubber having a molecular weight M_{w} of 50,000 g/mol or less and a polydispersity index, PDI, of less than 2.0 and
(ii) at least one cross-linking agent,
and additionally containing one or more hydrogenated nitrile rubber components (v) having a Mooney viscosity (ML 1+4 at 100°C) in the range of from 30 to 150 and a polydispersity index in the range of from 2.5 to 6.0,
wherein component(s) (i) is/are present in the range of from 8 to 50 wt.% and component(s) (v) is/are present in the range of from 92 to 50 wt.% wherein the aforementioned wt.% are always based on the sum of weight of both, i.e. component(s) (i) and component(s) (v).

The present invention further relates to a process for preparing such vulcanizable polymer composition comprising mixing the above components (i), (ii) and (v). The invention also relates to a process for preparing vulcanizates comprising vulcanizing such vulcanizable composition, preferably by injection moulding methods. The present invention further relates to the vulcanizates based on such vulcanizable composition, preferably in the form of shaped articles.

### DETAILED DESCRIPTION OF THE INVENTION

In a preferred embodiment the vulcanizable polymer composition comprises
(i) at least one optionally hydrogenated nitrile rubber having a molecular weight M_{w} of 50,000 g/mol or less and a polydispersity index of less than 2.0,
(ii) at least one cross-linking agent and
(iii) at least one filler.
(v) and additionally one or more hydrogenated nitrile rubber components (v) having a Mooney viscosity (ML 1+4 at 100°C) in the range of from 30 to 150 and a polydispersity index in the range of from 2.5 to 6.0.

In a further **preferred embodiment** the vulcanizable polymer composition further comprises
(i) at least one optionally hydrogenated nitrile rubber having a molecular weight M_{w} of 50,000 g/mol or less and a polydispersity index of less than 2.0,
(ii) at least one cross-linking agent,
(iii) at least one filler and
(iv) one or more further auxiliary compounds
(v) and additionally one or more hydrogenated nitrile rubber components (v) having a Mooney viscosity (ML 1+4 at 100°C) in the range of from 30 to 150 and a polydispersity index in the range of from 2.5 to 6.0.

In a further **preferred embodiment** the vulcanizable polymer composition comprises
(i) at least one optionally hydrogenated nitrile rubber having a molecular weight M_{w} of up to 50,000 g/mol and a polydispersity index of less than 2.0,
(ii) at least one cross-linking agent,
(iii) at least one filler and
(iv) at least one vulcanization co-agent as auxiliary compound, more preferably selected from the group consisting of zinc acrylate, zinc diacrylate, zinc methacrylate, zinc dimethacrylate, trimethylolpropanetrimethacrylate (TRIM), butane-dioldimethacrylate BDMA), ethylenglycoldimethacrylate (EDMA) and Triallylisocyanurate (TAIC)
(v) and additionally containing one or more hydrogenated nitrile rubber components (v) having a Mooney viscosity (ML 1+4 at 100°C) in the range of from 30 to 150 and a polydispersity index in the range of from 2.5 to 6.0.

The vulcanizable polymer compositions according to the present invention have now become accessible for the first time, as it has been found that the metathesis reaction of a starting nitrile rubber in the presence of a metal catalyst complex in a solvent leads to a polymer having a molecular weight (M_{w}) of 50,000 g/mol or less, preferably 10,000 to 50,000 g/mol, more preferably 12,000 to 40,000 g/mol and a polydispersity (M_{w}/Mₙ) of less than 2.0, which polymer can be isolated from the solvent through a process where the polymer is contacted with a mechanical degassing device. With a subsequent hydrogenation reaction it is furtheron possible to obtain hydrogenated nitrile rubbers with a molecular weight (M_{w}) of 50,000 g/mol or less, preferably 10,000 to 50,000 g/mol, more preferably 12,000 to 40,000 g/mol and a polydispersity (M_{w}/Mₙ) of less than 2.0.

As mentioned throughout this application "M_{w}" means the weight average molecular weight and "Mₙ" means the number average molecular weight. The determination of the number average molecular weight Mₙ and the weight average molecular weight M_{w} is carried out by GPC in accordance with DIN 55672-1. As far as Mooney viscosities (ML 1+4 at 100°C) are mentioned throughout this application the determination of such Mooney viscosity (ML 1+4 at 100°C) is carried out in accordance with ASTM standard D 1646.

### Vulcanizable polymer composition:

The **vulcanizable polymer composition** according to the present invention and its components will now be described in detail for purposes of illustration and not limitation. All ranges include any combination of the maximum and minimum points disclosed and include any intermediate ranges therein, which may or may not be specifically described herein.

The vulcanizable compositions according to the present invention dispose of an advantageous low viscosity which is typically up to 50,000 Pa*s, preferably below 10,000 Pa*s, more preferably below 1,000 Pa*s as measured at shear rates in the range of from 1 to 200 s⁻¹ and at a temperature of 100°C. The determination of such viscosity in dependence on shear rate and temperature is carried out with a Rheometer, MCR 301 (Anton Paar, Germany) with a Plate/Plate geometry, plate-diameter: 25mm. In view of such low viscosity the vulcanizable compositions according to the present invention show a remarkable flowability, allow an easy processing and are ideally suited for injection moulding techniques and specifically for liquid injection moulding methods. The novel vulcanizable polymer compositions allow for complete filling of complex mould designs at manageable pressures and temperatures within shorter timeframes than observed so far with the prior art compositions. This is in particular remarkable for such vulcanizable compositions according to the present invention which additionally comprise one or more fillers. The vulcanizable compositions according to the present invention may allow for higher filler loadings and still maintain the good processing behaviour similar to other compositions based on higher viscous optionally hydrogenated nitrile rubbers with less filler loading.

The presence of flow improving auxiliary products has proved to be not necessary in the novel vulcanizable polymer compositions. In addition the vulcanizable compositions according to the present invention are ideally suited for the manufacture of in-place gaskets ("IPG") and for the manufacture of soft seals with a hardness of less than 40 Shore A even without the use of any plasticizer which typically needs to be used in commercially available vulcanizable compositions on the basis of higher viscous optionally hydrogenated nitrile rubbers.

The vulcanizates obtained by curing the vulcanizable polymer compositions according to the present invention show excellent dynamical properties and similar ageing stability and resistance against oxidative and heat degradation as other known vulcanizates based on optionally hydrogenated nitrile rubbbers of substantially higher viscosity. Compared to commercially available silicones of similar extremely low molecular weight the vulcanizable compositions of the present invention show a clear commercial advantage due to their improved resistance to oil and other non-polar media.

### Component (i): Optionally hydrogenated nitrile rubber

The optionally hydrogenated nitrile rubber having a molecular weight M_{w} of up to 50,000 g/mol and a polydispersity index of less than 2.0 (component (i) of the novel polymer composition) may also be characterized by the viscosity measured in dependence on shear rate and temperature with a Rheometer, MCR 301 (Anton Paar, Germany) with a Plate/Plate geometry, plate-diameter: 25mm. At a temperature of 100°C and a shear rate in the range of from 1 to 200 s⁻¹ the optionally hydrogenated nitrile rubber typically has a viscosity of up to 50,000 Pa*s, preferably in the range of from 10 to 10,000 Pa*s and more preferably in the range of from 10 to 1,000 Pa*s and therefore flows about 1,000 to 10,000 times easier than e.g. the commercially available hydrogenated nitrile rubbers with substantially higher viscosities the latter being measured as so called Mooney viscosities (ML 1+4 at 100°C) with values of e.g. about 39.

The optionally hydrogenated nitrile rubber having a molecular weight M_{w} of up to 50,000 g/mol and a polydispersity index of less than 2.0 can be prepared and obtained by
a) subjecting a starting nitrile rubber to a molecular weight degradation via a metathesis reaction in the presence of a homogeneous catalyst and optionally a co-olefin, as well as in the presence of a solvent, wherein the metathesis is carried out in the presence of at least one transition metal complex catalyst, wherein the nitrile rubber is isolated from the solvent through a process where the rubber is contacted with a mechanical degassing device and
b) in case of hydrogenated nitrile rubber a hydrogenation reaction which may either be performed after the metathesis step a) or even simultaneously.

For the purposes of the present patent application and invention, all the definitions of radicals, parameters or explanations given above or below in general terms or in preferred ranges can be combined with one another in any way, i.e. including combinations of the respective ranges and preferred ranges.

The term "substituted" used for the purposes of the present patent application in respect of the metathesis catalyst or the salt of the general formula (I) means that a hydrogen atom on an indicated radical or atom has been replaced by one of the groups indicated in each case, with the proviso that the valence of the atom indicated is not exceeded and the substitution leads to a stable compound.

### CATALYSTS:

In the metathesis step a) the catalysts or catalyst precursors used are transition metal complex carbenes or transition metal complex compounds which form transition metal carbenes under the reaction conditions or transition metal salts in combination with an alkylating agent. These catalysts can be either ionic or nonionic.

Suitable catalysts which may be used in the process of the present invention are **compounds of the general formula (I)** 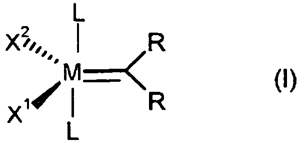 where
- M: is osmium or ruthenium,
- the radicals R: are identical or different and are each an alkyl, preferably C₁-C₃₀-alkyl, cycloalkyl, preferably C₃-C₂₀-cycloalkyl, alkenyl, preferably C₂-C₂₀-alkenyl, alkynyl, preferably C₂-C₂₀-alkynyl, aryl, preferably C₆-C₂₄-aryl, carboxylate, preferably C₁-C₂₀-carboxylate, alkoxy, preferably C₁-C₂₀-alkoxy, alkenyloxy, preferably C₂-C₂₀-alkenyloxy, alkynyloxy, preferably C₂-C₂₀-alkynyloxy, aryloxy, preferably C₆-C₂₄-aryloxy, alkoxycarbonyl, preferably C₂-C₂₀-alkoxycarbonyl, alkylamino, preferably C₁-C₃₀-alkylamino, alkylthio, preferably C₁-C₃₀-alkylthio, arylthio, preferably C₆-C₂₄-arylthio, alkylsulphonyl, preferably C₁-C₂₀alkylsulphonyl, or alkylsulphinyl, preferably C₁-C₂₀-alkylsulphinyl radical, each of which may optionally be substituted by one or more alkyl halogen, alkoxy, aryl or heteroaryl radicals,
- X¹ and X²: are identical or different and are two ligands, preferably anionic ligands, and
- L: represents identical or different ligands, preferably uncharged electron donors.

In the catalysts of the general formula (I), **X**¹ and **X²** are identical or different and are two ligands, preferably anionic ligands.

A variety of representatives of the catalysts of the formula (I) are known in principle, e.g. from WO-A-96/04289 and WO-A-97/06185.

Particular preference is given to both ligands L in the general formula (I) being identical or different trialhylphosphine ligands in which at least one of the alkyl groups is a secondary alkyl group or a cycloalkyl group, preferably isopropyl, isobutyl, sec-butyl, neopentyl, cyclopentyl or cyclohexyl.

Particular preference is given to one ligand L in the general formula (I) being a trialkylphosphine ligand in which at least one of the alkyl groups is a secondary alkyl group or a cycloalkyl group, preferably isopropyl, isobutyl, sec-butyl, neopentyl, cyclopentyl or cyclohexyl.

Two catalysts which are preferred for the catalyst system of the invention and come under the general formula (I) have the structures (III) (Grubbs (I) catalyst) and (IV) (Grubbs (II) catalyst), where Cy is cyclohexyl.

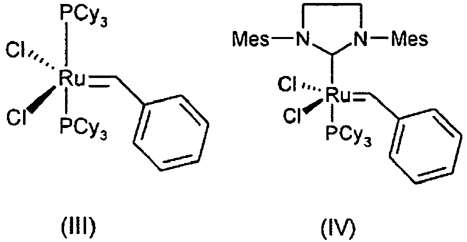

Further suitable metathesis catalysts which may be used in the process of the present invention are **catalysts of the general formula (V),** 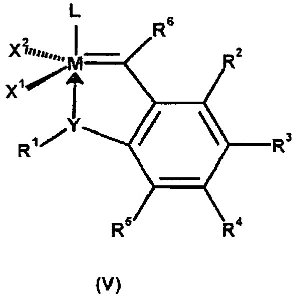 where
- M: is ruthenium or osmium,
- Y: is oxygen (O), sulphur (S), an N-R¹ radical or a P-R¹ radical, where R¹ is as defined below,
- X¹ and X²: are identical or different ligands,
- R¹: is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphynyl radical, each of which may optionally be substituted by one or more alkyl, halogen, alkoxy, aryl or heteroaryl radicals,
- R², R³, R⁴ and R⁵: are identical or different and are each hydrogen, organic or inorganic radicals,
- R⁶: is hydrogen or an alkyl, alkenyl, alkynyl or aryl radical and
- L: is a ligand which has the same meanings given for the formula (I).

The catalysts of the general formula (V) are known in principle. Representatives of this class of compounds are the catalysts described by Hoveyda et al. in US 2002/0107138 A1 and Angew Chem. Int. Ed. 2003, 42, 4592**,** and the catalysts described by Grela in WO-A-2004/035596**,** Eur. J. Org. Chem 2003, 963-966 **and** Angew. Chem. Int. Ed. 2002, 41, 4038 and in J. Org. Chem. 2004, 69, 6894-96 **and** Chem. Eur. J 2004, 10, 777-784**.** The catalysts are commercially available or can be prepared as described in the references cited.

Particularly suitable catalysts which may be used in the process of the present invention are **catalysts of the general formula (VI)** 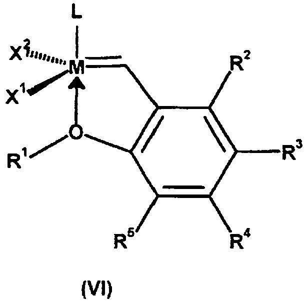 where
- M, L, X¹, X², R¹, R², R³, R⁴ and R⁵: can have the general, preferred and particularly preferred meanings given for the general formula (V).

These catalysts are known in principle, for example from US 2002/0107138 A1 (Hoveyda et al.**),** and can be obtained by preparative methods indicated there.

Particular preference is given to catalysts of the general formula (VI) in which
- M: is ruthenium,
- X¹ and X²: are both halogen, in particular, both chlorine,
- R¹: is a straight-chain or branched C₁-C₁₂-alkyl radical,
- R², R³, R⁴, R⁵: have the general and preferred meanings given for the general formula (V) and
- L: has the general and preferred meanings given for the general formula (V).

Very particular preference is given to catalysts of the general formula (VI) in which
- M: is ruthenium,
- X¹ and X²: are both chlorine,
- R¹: is an isopropyl radical,
- R², R³, R⁴, R⁵: are all hydrogen and
- L: is a substituted or unsubstituted imidazolidine radical of the formula (IIa) or (IIb), 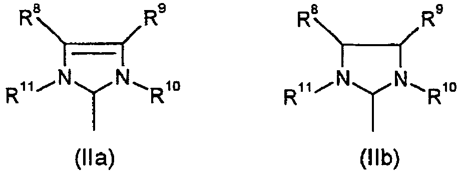 where
R⁸, R⁹, R¹⁰, R¹¹ are identical or different and are each hydrogen, straight-chain or branched C₁-C₃₀-alkyl, C₃-C₂₀-cycloalkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₆-C₂₄-arylthio, C₁-C₁₀-alkylsulphonyl, C₁-C₂₀-alkylsulphonate, C₆-C₂₄-arylsulphonate or C₁-C₂₀-alkylsulphinyl

As catalyst coming under the general structural formula (VI) for the catalyst systems of the invention, especial preference is given to those of the formula (VII), where Mes is in each case a 2,4,6-trimethylphenyl radical.

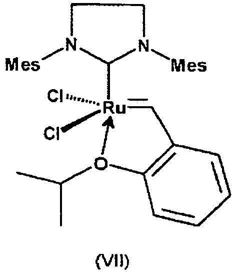

This catalyst is also referred to in the literature as "Hoveyda catalyst".

Further suitable catalysts which come under the general structural formula (VI) are those of the following formulae (VIII), (IX), (X), (XI), (XII), (XIII), (XIV) and (XV), where Mes is in each case a 2,4,6-trimethylphenyl radical.

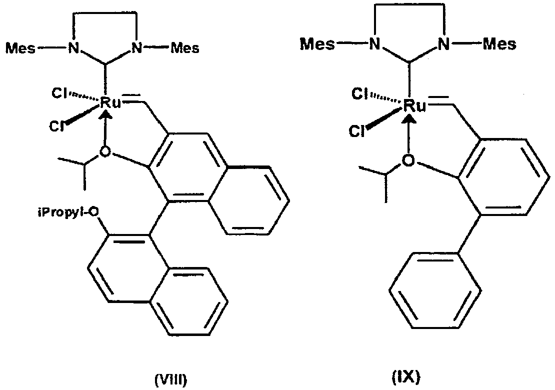

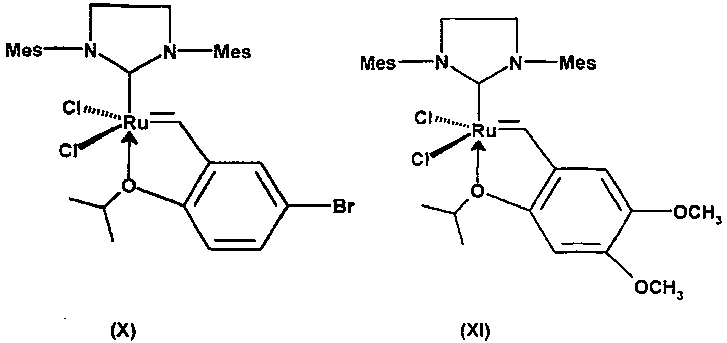

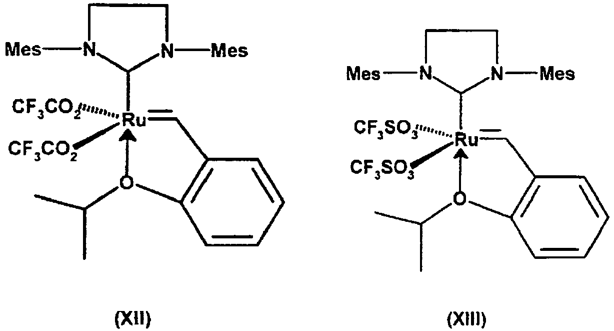

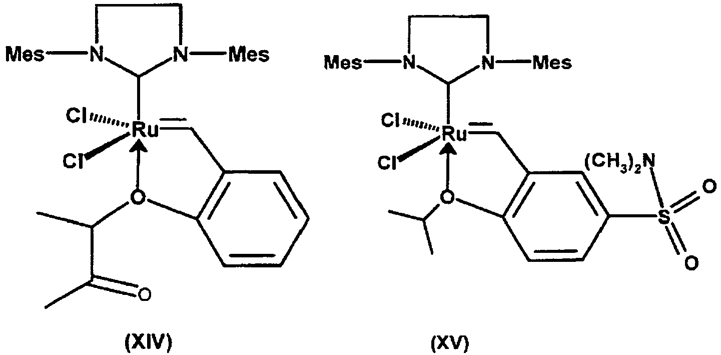

Further suitable catalysts which may be used in the process of the present invention are catalysts of **the general formula (XVI)** 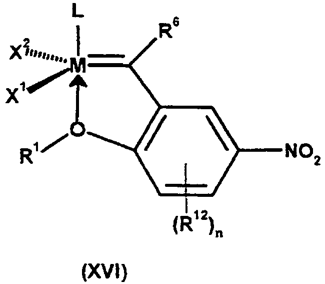 where
- M, L, X¹, X², R¹ and R⁶: have the general and preferred meanings given for the formula (V),
- R¹²: are identical or different and have the general and preferred meanings given for the radicals R², R³, R⁴ and R⁵ in the formula (V), with the exception of hydrogen, and
- n: is 0, 1, 2 or 3.

These catalysts are known in principle, for example from WO-A-2004/035596 (Grela), and can be obtained by the preparative methods indicated there.

Particular preference is given to catalysts of the general formula (XVI) in which
- M: is ruthenium,
- X¹ and X²: are both halogen, in particular both chlorine,
- R¹: is a straight-chain or branched C₁-C₁₂-alkyl radical,
- R¹²: has the meanings given for the general formula (V),
- n: is 0, 1, 2 or 3,
- R⁶: is hydrogen and
- L: has the meanings given for the general formula (V).

Very particular preference is given to catalysts of the general formula (XVI) in which
- M: is ruthenium,
- X¹ and X²: are both chlorine,
- R¹: is an isopropyl radical,
- n: is 0 and
- L: is a substituted or unsubstituted imidazolidine radical of the formula (IIa) or (IIb), 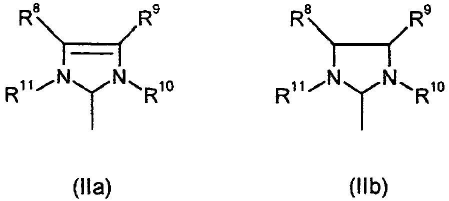 where
R⁸, R⁹, R¹⁰, R¹¹ are identical or different and are each hydrogen, straight-chain or branched, cyclic or acyclic C₁-C₃₀-alkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₆-C₂₄-arylthio, C₁-C₂₀-alkylsulphonyl C₁-C₂₀-alkylsulphonate, C₆-C₂₄-arylsulphonate or C₁-C₂₀-alkylsulphinyl.

A particularly suitable catalyst which comes under general formula (XVI) has the structure (XVII) 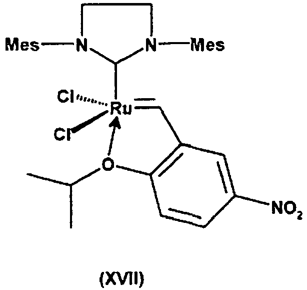 and is also referred to in the literature as "Grela catalyst".

A further suitable catalyst which comes under the general formula (XVI) has the structure (XVIII), where Mes is in each case a 2,4,6-trimethylphenyl radical.

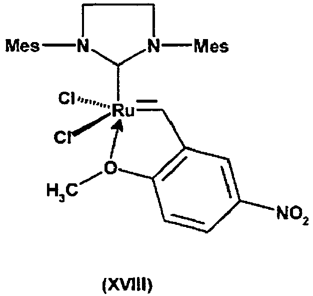

In an alternative embodiment, it is possible to use dendritic catalysts of the general formula (XIX), 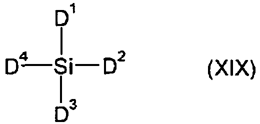 where D¹, D², D³ and D⁴ each have a structure of the general formula (XX) below which is bound via the methylene group to the silicon of the formula (XIX), 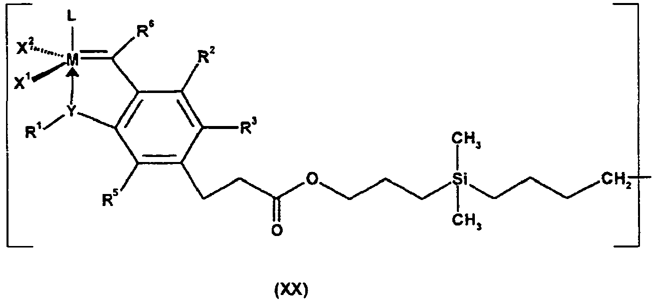 where
- M, L, X¹, X², R¹, R², R³, R⁵ and R⁶: have the meanings given for the general formula (V) and can also have the abovementioned preferred meanings.

Such catalysts of the general formula (XX) are known from US 2002/0107138 A1 and can be prepared according to the information given there.

Further suitable catalysts which may be used in the process of the present invention are catalysts of the general formula (XXI - XXIII) 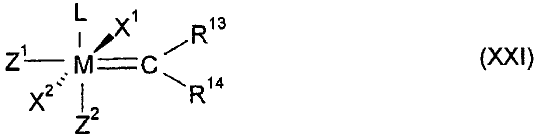 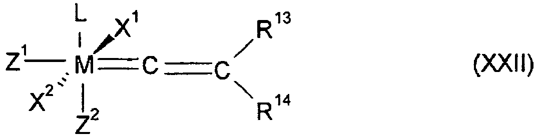 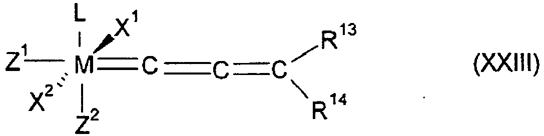 where
- M: is ruthenium or osmium,
- X¹ and X²: are identical or different ligands, preferably anionic ligands,
- Z¹ and Z²: are identical or different and neutral electron donor ligands,
- R¹³ and R¹⁴: are each independently hydrogen or a substituent selected from the group consisting of alkyl, cycloalkyl, alkenyl, alkynyl, aryl, carboxylate, alkoxy, alkenyloxy, alkynyloxy, aryloxy, alkoxycarbonyl, alkylamino, alkylthio, arylthio, alkylsulphonyl and alkylsulphinyl radical, each of which may optionally be substituted by one or more alkyl, halogen, alkoxy, aryl or heteroaryl radicals, and
- L: is a ligand.

The catalysts of the general formula (XXI)-(XXIII) are known. Representatives of this class of compounds are the catalysts described by Grubbs et al. in WO 2003/011455 A1, Grubbs et al. WO 2003/087167 A2**,** Organometallics 2001, 20, 5314 **and** Angew. Chem. Int. Ed. 2002, 41, 4038**.** The catalysts are commercially available or can be prepared as described in the references cited.

### Z¹ and Z²

In the process of the present invention the catalysts of general formulae (XXI), (XXII) and (XXIII) are used in which **Z¹** and **Z²** can be identical or different ligands being neutral electron donor ligands. Such ligands are in general weakly coordinating. Typically they represent optionally substituted heterocyclic groups. They may represent five- or six-membered monocyclic groups containing 1 to 4, preferably 1 to 3, most preferably 1 or 2 heteroatoms, or bicyclic or polycyclic structures composed of 2, 3, 4 or 5 such five- or six-membered monocyclic groups wherein all aforementioned groups are optionally substituted by one or more alkyl, preferably C₁-C₁₀-alkyl, cycloalkyl, preferably C₃-C₈-cycloalkyl, alkoxy, preferably C₁-C₁₀-alkoxy, halogen, preferably chlorine or bromine, aryl, preferably C₆-C₂₄-aryl, or heteroaryl, preferably C₅-C₂₃-heteroaryl radicals where these abovementioned substituents may in turn be substituted by one or more radicals, preferably selected from the group consisting of halogen, in particular chlorine or bromine, C₁-C₅-alkyl, C₁-C₅-alkoxy and phenyl.

Examples of Z¹ and Z² include, without limitation: nitrogen containing heterocycles such as pyridine, pyridazine, bipyridine, pyrimidine, pyrazine, pyrazolidine, pyrrolidine, piperazine, indazole, quinoline, purine, acridine, bisimidazole, picolylimine, imidazolidine and pyrrole. Z1 and Z2 together may also represent a bidentate ligand, thereby forming a cyclic structure.

Particular preference is given to a process according to the invention using catalysts of the general formula (XXI) in which
- M: is ruthenium,
- X¹ and X²: are both halogen, in particular, both chlorine,
- Z¹ and Z²: are identical or different and represent five- or six-membered monocyclic groups containing I to 4, preferably 1 to 3, most preferably 1 or 2 heteroatoms, or bicyclic or polycyclic structures composed of 2, 3, 4 or 5 such five- or six-membered monocyclic groups wherein all aforementioned groups are optionally substituted by one or more alkyl, preferably C₁-C₁₀-alkyl, cycloalkyl, preferably C₃-C₈-cycloalkyl, alkoxy, preferably C₁-C₁₀-alkoxy, halogen, preferably chlorine or bromine, aryl, preferably C₆-C₂₄-aryl, or heteroaryl, preferably C₅-C₂₃ heteroaryl radicals, or Z¹ and Z² together represent a bidentate ligand, thereby forming a cyclic structure,
- R¹³ and R¹⁴: are identical or different and are each C₁-C₃₀-alkyl C₃-C₂₀-cycloalkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₃₀-alkylamino, C₁-C₃₀-alkylthio, C₆-C₂₄-arylthio, C₁-C₂₀-alkylsulphonyl, C₁-C₂₀-alkylsulphinyl, each of which may optionally be substituted by one or more alkyl, halogen, alkoxy, aryl or heteroaryl radicals, and
- L: is a substituted or unsubstituted imidazolidine radical of the formula (IIa) or (IIb), 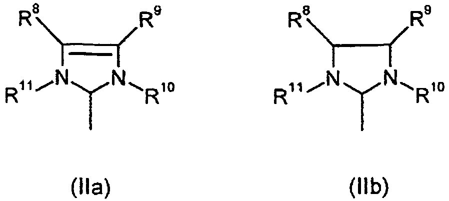 where
R⁸, R⁹, R¹⁰, R¹¹ are identical or different and are each hydrogen, straight-chain or branched, cyclic or acyclic C₁-C₃₀-alkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₆-C₂₄-arylthio, C₁-C₂₀-alkylsulphonyl, C₁-C₂₀-alkylsulphonate, C₆-C₂₄-arylsulphonate or C₁-C₂₀-alkylsulphinyl.

A particularly preferred catalyst which comes under the general structural formula (XXI) is that of the formula (XXIV) 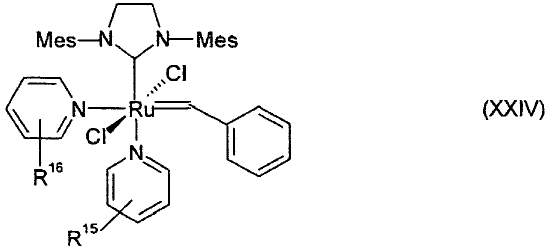 where
- R¹⁵, R¹⁶: are identical or different and represent halogen, straight-chain or branched C₁-C₂₀ alkyl, C₁-C₂₀ heteroalkyl, C₁-C₁₀ haloalkyl, C₁-C₁₀ alkoxy, C₆-C₂₄ aryl, preferably phenyl, formyl, nitro, nitrogen heterocycles, preferably pyridine, piperidine and pyrazine, carboxy, alkylcarbonyl, halocarbonyl, carbamoyl, thiocarbomoyl, carbamido, thioformyl, amino, trialkylsilyl und trialkoxysilyl.

The aforementioned alkyl, heteroalkyl, haloalkyl, alkoxy, phenyl, nitrogen heterocycles, alkylcarbonyl, halocarbonyl, carbamoyl, thiocarbamoyl and amino radicals may optionally also in turn be substituted by one or more substituents selected from the group consisting of halogen, preferably fluorine, chlorine, or bromine, C₁-C₅-alkyl, C₁-C₅-alkoxy and phenyl.

In a particularly preferred embodiment the catalyst (XXIV) has the general structural formula (XXIVa) or (XXIVb), wherein R¹⁵ and R¹⁶ have the same meaning as given for structural formula (XXIV)

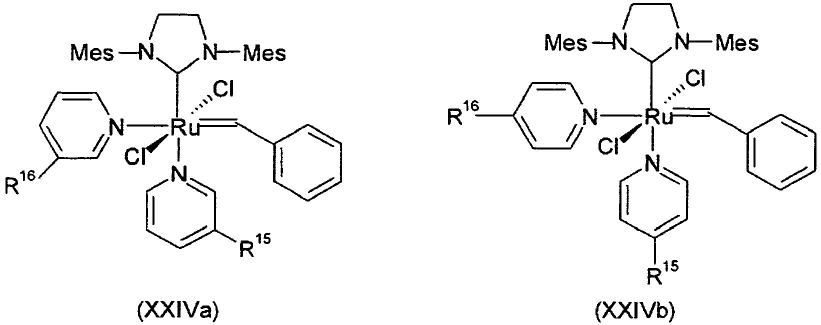

In the case where R¹⁵ and R¹⁶ are both hydrogen, catalyst (XXIV) is referred to as "Grubbs III catalyst" in the literature.

A metathesis catalyst which may be used in the process of the present invention can also be prepared using catalysts of the general formula (XXV), 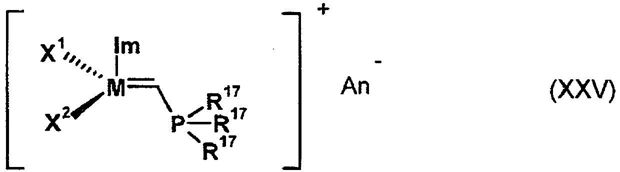 where
- M: is ruthenium or osmium,
- X¹ and X²: can be identical or different and are anionic ligands,
- the radicals R¹⁷: are identical or different and are organic radicals,
- Im: is a substituted or unsubstituted imidazolidine radical and
- An: is an anion.

These catalysts are known in principle (cf., e.g. Angew. Chem. Int. Ed. 2004,43, 6161-6165**).**

Further suitable catalysts which may be used in the process of the present invention are **catalysts of the general formula (XXVI),** 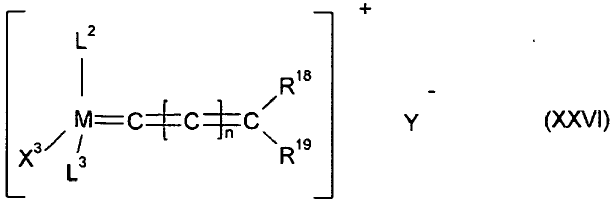 where
- M: is ruthenium or osmium,
- R¹⁸ and R¹⁹: are each, independently of one another, hydrogen, C₁-C₂₀-alkyl, C₂-C₂₀-alkenyl, C₂-C₂₀-alkynyl, C₆-C₂₄-aryl, C₁-C₂₀-carboxylate, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylthio, C₁-C₂₀-alkylsulphonyl or C₁-C₂₀-alkylsulphinyl,
- X³: is an anionic ligand,
- L²: is an uncharged π-bonded ligand, regardless of whether it is monocyclic or polycyclic,
- L³: is a ligand from the group of phosphines, sulphonated phosphines, fluorinated phosphines, functionalized phosphines having up to three aminoalkyl, ammonioalkyl, alkoxyalkyl, alkoxycarbonylalkyl, hydrocarbonylalkyl, hydroxyalkyl or ketoalkyl groups, phosphites, phosphinites, phosphonites, phosphine amines, arsines, stibines, ethers, amines, amides, imines, sulphoxides, thioethers and pyridines,
- Y⁻: is a noncoordinating anion and
- n: is 0, 1, 2, 3, 4 or 5.

Further suitable catalysts for which may be used in the process of the present invention are **catalysts of the general formula (XXVII)** 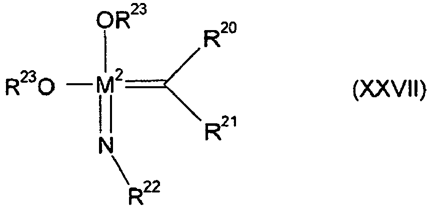 where
- M²: is molybdenum or tungsten,
- R²⁰ and R²¹: are identical or different and are each hydrogen, C₁-C₂₀-alkyl, C₂-C₂₀-alkenyl, C₂-C₂₀-alkynyl, C₆-C₂₄-aryl, C₁-C₂₀-carboxylate, C₁-C₂₀-alkoxy, C₁-C₂₀-alkenyloxy, C₂-C₂₀-alkynyloxy, C₆-C₂₄-aryloxy, C₂-C₂₀-alkoxycarbonyl, C₁-C₂₀-alkylthio, C₁-C₂₀-alkylsulphonyl or C₁-C₂₀-alkylsulphinyl, and
- R²² and R²³: are identical or different and are each a substituted or halogen-substituted C₁-C₂₀-alkyl, C₆-C₂₄-aryl, C₆-C₃₀-aralkyl radical or a silicone-containing analogue thereof.

Further suitable catalysts which may be used in the process of the present invention are catalysts of **the general formula (XXVIII),** 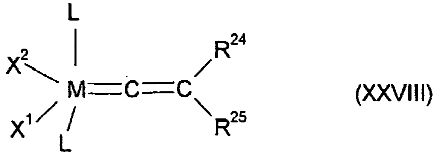 where
- M: is ruthenium or osmium,
- X¹ and X²: are identical or different and are anionic ligands which can assume all the meanings of X¹ and X² in the general formulae (I) and (V),
- L: are identical or different ligands which can assume all the general and preferred meanings of L in the general formulae (I) and (V), and
- R²⁴ and R²⁵: are identical or different and are each hydrogen or substituted or unsubstituted alkyl.

All the abovementioned catalysts of formula (I) can either be used as such in the reaction mixture of the NBR metathesis or can be applied to and immobilized on a solid support. As solid phases or supports, it is possible to use materials which firstly are inert towards the reaction mixture of the metathesis and secondly do not impair the activity of the catalyst. It is possible to use, for example, metals, glass, polymers, ceramic, organic polymer spheres or inorganic sol-gels for immobilizing the catalyst.

The above described process uses nitrile rubbers as starting rubber for the metathesis reaction. As nitrile rubbers ("NBR"), it is possible to use copolymers or terpolymers which comprise repeating units of at least one conjugated diene, at least one α,β-unsaturated nitrile and, if desired, one or more further copolymerizable monomers in the polymerization reaction.

The **conjugated diene** can be of any nature. Preference is given to using (C₄-C₆) conjugated dienes. Particular preference is given to 1,3-butadiene, isoprene, 2,3-dimethylbutadiene, piperylene, 1,3-pentadiene or mixtures thereof. Very particular preference is given to 1,3-butadiene and isoprene or mixtures thereof. Especial preference is given to 1,3-butadiene.

As **α,β-unsaturated nitrile,** it is possible to use any known α,β-unsaturated nitrile, preferably a (C₃-C₅) α,β-unsaturated nitrile such as acrylonitrile, methacrylonitrile, 1-chloroacrylnitrile, ethacrylonitrile, or mixtures thereof. Particular preference is given to acrylonitrile.

A particularly preferred nitrile rubber is thus a copolymer of acrylonitrile and 1,3-butadiene or a hydrogenated copolymer of acrylonitrile and 1,3-butadiene.

Apart from the conjugated diene and the α,β-unsaturated nitrile, it is possible to use one or more further copolymerizable monomers known to those skilled in the art, e.g. α,β-unsaturated monocarboxylic acids, their esters, α,β-unsaturated dicarboxylic acids, their mono- oder diesters, as well as the respective anhydrides or amides of α,β-unsaturated mono- or dicarboxylic acids.

As **α,β-unsaturated monocarboxylic** acids acrylic acid and methacrylic acid are preferably used.

**Esters of α,β-unsaturated monocarboxylic acids** may also be used, in particular alkyl esters and alkoxyalkyl esters.

As **alkyl esters** C₁-C₁₈ alkyl esters of the α,β-unsaturated monocarboxylic acids are preferably used, more preferably C₁-C₁₈ alkyl esters of acrylic acid or methacrylic acid, such as methylacrylate, ethylacrylate, propylacrylate, n-butylacrylate, tert.-butylacrylate, 2-ethylhexylacrylate , n-dodecylacrylate, methylmethacrylate, ethylmethacrylate, propylmethacrylate, n-butylmethacrylate, tert.-butylmethacrylate and 2-ethylhexyl-methacrylate.

As **alkoxyalkyl esters** C₂-C₁₈ alkoxyalkyl esters of α,β-unsaturated monocarboxylic acids are preferably used, more preferably alkoxyalkylester of acrylic acid or methacrylic acid such as methoxy methyl(meth)acrylate, methoxy ethyl(meth)acrylate, ethoxyethyl(meth)acrylate and methoxyethyl(meth)acrylate.

It is also possible to use **aryl esters,** preferably C₆-C₁₄-aryl-, more preferably C₆-C₁₀-aryl esters and most preferably the aforementioned aryl esters of acrylates and methacrylates. In another emodiment **cycloalkyl esters,** preferably C₅-C₁₂-cycloalkyl-, more preferably C₆-C₁₂-cycloalkyl and most preferably the aforementioned cycloalkyl acrylates and methacrylates are used.

It is also possible to use **cyanoalkyl esters,** in particular cyanoalkyl acrylates or cyanoalkyl methacrylates, in which the number of C atoms in the cyanoalkyl group is in the range of from 2 to 12, preferably α-cyanoethyl acrylate, β-cyanoethyl acrylate or cyanobutyl methacrylate are used.

In another emodiment **hydroxyalkyl esters** are used, in particular hydroxyalkyl acrylates and hydroxyalkyl methacrylates in which the number of C-atoms in the hydroxylalkyl group is in the range of from 1 to 12, preferably 2-hydroxyethyl acrylate, 2-hydroxyethyl methacrylate or 3-hydroxypropyl acrylate.

It is also possible to use **fluorobenzyl esters,** in particular fluorobenzyl acrylates or fluorobenzyl methacrylates, preferably trifluoroethyl acrylate and tetrafluoropropyl methacrylate. **Substituted** amino **group containing acrylates and methacrylates** may also be used like dimethylaminomethyl acrylate and diethylaminoethylacrylate.

Various other esters of the α,β-unsaturated carboxylic acids may also be used, like e.g. polyethyleneglycol(meth)acrylate, polypropyleneglycole(meth)acrylate, glycidyl(meth)acrylate, epoxy(meth)acrylate, N-(2-hydroxyethyl)acrylamide, N-(2-hydroxymethyl)acrylamide or urethane(meth)acrylate.

It is also possible to use mixture of all aforementioned esters of α,β-unsaturated carboxylic acids.

Furthon **α,β-unsaturated dicarboxylic acids** may be used, preferably maleic acid, fumaric acid, crotonic acid, itaconic acid, citraconic acid and mesaconic acid.

In another embodiment **anhydrides of α,β-unsaturated dicarboxylic acids** are used, preferably maleic anhydride, itaconic anhydride, itaconic anhydride, citraconic anhydride and mesaconic anhydride.

In a further embodiment **mono-** or **diesters of α,β-unsaturated dicarboxylic acids** can be used. Suitable alkyl esters are e.g. C₁-C₁₀-alkyl, preferably ethyl-, n-propyl-, iso-propyl, n-butyl-, tert.-butyl, n-pentyl- oder n-hexyl mono- or diesters. Suitable alkoxyalkyl esters are e.g. C₂-C₁₂ alkoxyalkyl-, preferably C₃-C₈-alkoxyalkyl mono- or diesters. Suitable hydroxyalkyl esters are e.g. C₁-C₁₂ hydroxyalkyl-, preferably C₂-C₈-hydroxyalkyl mono- or diesters. Suitable cycloalkyl esters are e.g. C₅-C₁₂-cycloalkyl-, preferably C₆-C₁₂-cycloalkyl mono- or diesters. Suitable alkylcycloalkyl esters are e.g. C₆-C₁₂-alkylcycloalkyl-, preferably C₇-C₁₀-alkylcycloalkyl mono- or diesters. Suitable aryl esters are e.g. C₆-C₁₄-aryl, preferably C₆-C₁₀-aryl mono- or diesters.

Explicit examples of the **α,β-ethylenically unsaturated dicarboxylic acid monoester** monomers include
- maleic acid monoalkyl esters, preferably monomethyl maleate, monoethyl maleate, monopropyl maleate, and mono n-butyl maleate;
- maleic acid monocycloalkyl esters, preferably monocyclopentyl maleate, monocyclohexyl maleate, and monocycloheptyl maleate;
- maleic acid monoalkylcycloalkyl esters, preferably monomethylcyclopentyl maleate, and monoethylcyclohexyl maleate;
- maleic acid monoaryl ester, preferably monophenyl maleate;
- maleic acid mono benzyl ester, preferably monobenzyl maleate;
- fumaric acid monoalkyl esters, preferably monomethyl fumarate, monoethyl fumarate, monopropyl fumarate, and mono n-butyl fumarate;
- fumaric acid monocycloalkyl esters, preferably monocyclopentyl fumarate, monocyclohexyl fumarate, and monocycloheptyl fumarate;
- fumaric acid monoalkylcycloalkyl esters, preferably monomethylcyclopentyl fumarate, and monoethylcyclohexyl fumarate;
- fumaric acid monoaryl ester, preferably monophenyl fumarate;
- fumaric acid mono benzyl ester, preferably monobenzyl fumarate;
- citraconic acid monoalkyl esters, preferably monomethyl citraconate, monoethyl citraconate, monopropyl citraconate, and mono n-butyl citraconate;
- citraconic acid monocycloalkyl esters, preferably monocyclopentyl citraconate, monocyclohexyl citraconate, and monocycloheptyl citraconate;
- citraconic acid monoalkylcycloalkyl esters, preferably monomethylcyclopentyl citraconate, and monoethylcyclohexyl citraconate;
- citraconic acid mono aryl ester, preferably monophenyl citraconate;
- citraconic acid mono benzyl ester, preferably monobenzyl citraconate;
- itaconic acid mono alkyl esters, preferably monomethyl itaconate, monoethyl itaconate, monopropyl itaconate, and mono n-butyl itaconate;
- itaconic acid monocycloalkyl esters, preferably monocyclopentyl itaconate, monocyclohexyl itaconate, and monocycloheptyl itaconate;
- itaconic acid monoalkylcycloalkyl esters, preferably monomethylcyclopentyl itaconate, and monoethylcyclohexyl itaconate;
- itaconic acid mono aryl ester, preferably monophenyl itaconate;
- itaconic acid mono benzyl ester, preferably monobenzyl itaconate.

As α,β-ethylenically unsaturated dicarboxylic acid diester monomers the analoguos diesters based on the above explicitely mentioned mono ester monomers may be used, wherein, however, the two organic groups linked to the C=O group via the oxygen atom may be identical or different.

As further termonomers vinyl aromatic monomers like styrol, α-methylstyrol and vinylpyridine, as well as non-conjugated dienes like 4-cyanocyclohexene and 4-vinylcyclohexene, as well as alkines like 1- or 2-butine may be used.

The proportions of conjugated diene and α,β-unsaturated nitrile in the NBR polymers can vary within wide ranges. The proportion of or of the sum of the conjugated dienes is usually in the range from 40 to 90% by weight, preferably in the range from 60 to 85% by weight, based on the total polymer. The proportion of or of the sum of the α,β-unsaturated nitriles is usually from 10 to 60% by weight, preferably from 15 to 40% by weight, based on the total polymer. The proportions of the monomers in each case add up to 100% by weight. The additional termonomers can be present in amounts of from 0 to 40% by weight, preferably from 0.1 to 40% by weight, particularly preferably from 1 to 30% by weight, based on the total polymer. In this case, corresponding proportions of the conjugated diene or dienes and/or of the α,β-unsaturated nitrile or nitriles are replaced by the proportions of the additional monomers, with the proportions of all monomers in each case adding up to 100% by weight.

The preparation of nitrile rubbers by polymerization of the abovementioned monomers is adequately known to those skilled in the art and is comprehensively described in the polymer literature. In addition nitrile rubbers which can be used for the purposes of the invention are also commercially available, e.g. as products from the product range of the trade names Perbunan® and Krynac® from Lanxess Deutschland GmbH.

The nitrile rubbers suited as starting rubbers for the metathesis have a Mooney viscosity (ML 1+4 at 100°C) in the range from 25 to 120, preferably from 30 to 70. This corresponds to a number average molecular weight Mₙ in the range 200,000 - 700,000, preferably in the range 200,000 - 400,000. The starting nitrile rubbers typically have a polydispersity PDI = M_{w}/Mₙ, where M_{w} is the weight average molecular weight and Mₙ is the number average molecular weight, in the range 2.0 - 6.0 and preferably in the range 2.0 - 4.0.

The nitrile rubbers obtained by the above described metathesis can be used as low molecular weight rubber component (i) in the vulcanizable compositions according to the present invention and have a) a weight average molecular weight M_{w} of up to 50,000 g/mol, preferably in the range of from 10,000 to 50,000 g/mol, more preferably in the range 12,000 to 40,000 g/mol, and b) a polydispersity PDI = M_{w}/Mₙ, (with Mₙ being the number average molecular weight) of less than 2.0, preferably > 1.0 to less than 2.0, more preferably 1.1 to 1.9 and most preferably 1.2 to 1.9.

### Co-olefin:

The metathesis reaction for preparing the nitrile rubbers (i) to be used in the vulcanizable composition according to the present invention may be carried out in the presence of a so called co-olefin, which is preferably a C₂ to C₁₆ linear or branched olefin such as ethylene, isobutene, styrene or 1-hexene. Where the co-olefin is a liquid (such as 1-hexene), the amount of co-olefin employed is preferably in the range of from 1 to 200 weight %. Where the co-olefin is a gas (such as ethylene) the amount of co-olefin employed is such that it results in a pressure in the reaction vessel in the range of from 1 * 10⁵ Pa to 1 * 10⁷ Pa, preferably in the range of from 5.2 * 10⁵ Pa to 4 * 10⁶ Pa. Preferably the metathesis reaction is performed using 1-hexene.

### Solvent:

The metathesis reaction is carried out in a suitable solvent which does not deactivate the catalyst used and also does not adversely affect the reaction in any other way. Preferred suitable solvents are organic solvents, in particular, halogenated hydrocarbons such as dichloromethane, trichloromethane, tetrachloromethane, 1,2-dichloroethane or trichloroethane, aromatic compounds such as benzene, toluene, xylene, cumene or halogenobenzenes, preferably monochlorobenzene (MCB), ethers such as diethyl ether, tetrahydrofuran and dimethoxyethane, acetone, dimethyl carbonate or alcohols. In certain cases if a co-olefin is used which can itself act as a solvent (for example, 1-hexene) no other solvent is necessary.

The concentration of the starting nitrile rubber in the reaction mixture is not critical but, obviously, should be such that the reaction is not hampered if the mixture is too viscous to be stirred efficiently, for example. Preferably, the concentration of NBR is in the range of from 1 to 20% by weight, most preferably in the range of from 6 to 15% by weight of the total mixture.

The metathesis reaction is carried out at a temperature in the range of from 15 to 140°C; preferably in the range of from 20 to 80°C.

The amount of metathesis catalyst based on the nitrile rubber used depends on the nature and the catalytic activity of the specific catalyst. The weight amount of catalyst used is usually from 1 to 1000 ppm of noble metal, preferably from 2 to 500 ppm, in particular from 5 to 250 ppm, based on the nitrile rubber used. In a preferred embodiment of the present invention the weight amount of catalyst (calatyst loading) is in the range of from 0.01 to 0.30 phr, more preferably 0.02 to 0.25 phr. If a Grubbs (I) catalyst of structure (III), Grubbs (II) catalyst of structure (IV), a Hoveyda catalyst of structure (VII), a Grela catalyst of structure (XVII), a dendritic catalyst of structure (XIX), a Grubbs (III) catalyst of structure (XXIV) or a catalyst of any of the structures (XXIV), (XXV), (XXVI), (XXVII) or (XXVIII) is employed, the catalyst loading is for example even more preferably in the range of from 0.06 to 0.10 phr (parts per hundred of rubber).

The metathetic degradation process which yields the nitrile rubbers which may be used in the vulcanizable composition may further be followed by a hydrogenation of the degraded nitrile rubbers obtained. This can be carried out in the manner known to those skilled in the art.

It is possible to carry out the hydrogenation with use of homogeneous or heterogeneous hydrogenation catalysts. It is also possible to carry out the hydrogenation in situ, i.e. in the same reaction vessel in which the metathetic degradation has previously also been carried out and without the necessity of isolating the degraded nitrile rubber. The hydrogenation catalyst is simply added to the reaction vessel.

The catalysts used are usually based on rhodium, ruthenium or titanium, but it is also possible to use platinum, iridium, palladium, rhenium, osmium, cobalt or copper either as metal or preferably in the form of metal compounds (cf., for example, US-A-3,700,637**,** DE-A-25 39132**,** EP-A-0 134 023 **,** D E-A-35 41 689**,** DE-A-35 40 918**,** EP-A-0 298 386**,** DE-A-35 29 252**,** DE-A-34 33 392**,** US-A-4,464,515 **and** US-A-4,503,196**).**

Suitable catalysts and solvents for a hydrogenation in the homogeneous phase are described below and are also known from DE-A-25 39 132 and EP-A-0 471 250**.**

The selective hydrogenation can be achieved, for example, in the presence of a rhodium- or ruthenium-containing catalyst. It is possible to use, for example, a catalyst of the general formula,

(R¹ₘB)₁ M Xₙ

where M is ruthenium or rhodium, the radicals R¹ are identical or different and are each a C₁-C₈-alkyl group, a C₄-C₈-cycloalkyl group, a C₆-C₁₅-aryl group or a C₇₋C₁₅-aralkyl group. B is phosphorus, arsenic, sulphur or a sulphoxide group S=O, X is hydrogen or an anion, preferably halogen and particularly preferably chlorine or bromine, 1 is 2, 3 or 4, m is 2 or 3 and n is 1, 2 or 3, preferably 1 or 3. Preferred catalysts are tris(triphenylphosphine)rhodium(I) chloride, tris(triphenylphosphine)rhodium(III) chloride and tris(dimethyl sulphoxide)rhodium(III) chloride and also tetrakis(triphenylphosphine)rhodium hydride of the formula (C₆H₅)₃P)₄RhH and the corresponding compounds in which the triphenylphosphine has been completely or partly replaced by tricyclohexylphosphine. The catalyst can be utilized in small amounts. An amount in the range 0.01-1% by weight, preferably in the range 0.03-0.5% by weight and particularly preferably in the range 0.1-0.3% by weight, based on the weight of the polymer, is suitable.

It is usually appropriate to use the catalyst together with a cocatalyst which is a ligand of the formula R¹ₘB, where R¹, m and B have the meanings given above for the catalyst. Preferably, m is 3, B is phosphorus and the radicals R¹ can be identical or different. Preference is given to cocatalysts having trialkyl, tricycloalkyl, triaryl, triaralkyl, diaryl-monoalkyl, diaryl-monocycloalkyl, dialkyl-monoaryl, dialkyl-monocycloalkyl, dicycloalkyl-monoaryl or dicycloalkyl-monoaryl radicals.

Examples of cocatalysts may be found in, for example, US-A-4,631,315**.** A preferred cocatalyst is triphenylphosphine. The cocatalyst is preferably used in amounts in the range 0.3-5% by weight, preferably in the range 0.5-4% by weight, based on the weight of the nitrile rubber to be hydrogenated. Furthermore, the weight ratio of the rhodium-containing catalyst to the cocatalyst is preferably in the range from 1:3 to 1:55, more preferably in the range from 1:5 to 1:45. Based on 100 parts by weight of the nitrile rubber to be hydrogenated, it is appropriate to use from 0.1 to 33 parts by weight of the cocatalyst, preferably from 0.5 to 20 parts by weight and very particularly preferably from 1 to 5 parts by weight, in particular more than 2 but less than 5 parts by weight, of cocatalyst per 100 parts by weight of the nitrile rubber to be hydrogenated.

The practical implementation of this hydrogenation is adequately known to those skilled in the art from US-A-6,683,13b**.** It is usually carried out by treating the nitrile rubber to be hydrogenated in a solvent such as toluene or monochlorobenzene with hydrogen at a temperature in the range from 100 to 150°C and a pressure in the range from 50 to 150 bar for from 2 to 10 hours.

For the purposes of the present invention, hydrogenation is a selective reaction of the double bonds present in the starting nitrile rubber to an extent of at least 50%, preferably 70-100%, particularly preferably 80-100%.

When heterogeneous catalysts are used, these are usually supported catalysts based on palladium which are, for example, supported on carbon, silica, calcium carbonate or barium sulphate.

After conclusion of the hydrogenation, a hydrogenated nitrile rubber having a) a weight average molecular weight of up to 50,000 g/mol, preferably in the range 10,000 to 50,000 g/mol, more preferably in the range 12,000 to 40,000 g/mol and b) a polydispersity PDI = M_{w}/Mₙ, where M_{w} is the weight average molecular weight and Mₙ is the number average molecular weight, of less than 2.0, preferably > 1.0 to less than 2.0, more preferably 1.1 to 1.9, and most preferably 1.2 to 1.9 is obtained.

The optionally hydrogenated nitrile rubber is isolated from the solvent solution by contacting the rubber with a mechanical degassing device. With the low molecular weight of the isolated rubber, it is not advantageous to use standard isolation techniques such as coagulation with alcohols (methanol, isopropanol, ethanol etc.) or steam/water due to the extreme tackiness of the polymer which would result in lost product and lengthy finishing times. The process described in the following allows the isolation of the low molecular weight optionally hydrogenated nitrile polymer from the organic solvent in high yield.

### Polymer Isolation:

It is necessary to remove the residual solvent from the polymer for a variety of reasons: The solvents are harmful to health and the environment and at high concentrations, degrade the polymer's performance. It is therefore desirable to have a low residual solvent level of below 2000 ppm, preferred below 1000 ppm and especially preferred below 500 ppm.

The technology of isolating rubbers from solvents and of reaching low residuals for rubbers is well known in the art. It usually comprises coagulating the rubber using steam or a non-solvent, stripping the solvent from the rubber in the form of an aqueous suspension with steam in stirred vessel and removing the water from the stripping process with a combination of dewatering presses and dryers. However, it proved impossible to use this technology for the large scale commercial production of the low molecular weight rubbers necessary for the polymer compositions according to this invention. It was surprisingly found that the nitrile rubber could be isolated from solution and brought to the low desired residuals levels by a "dry" process, which does not involve water.

The optionally hydrogenated nitrile rubber may be isolated from the organic solvent solution through a process where the rubber is contacted with a mechanical degassing device, wherein the mechanical degassing device is preferably a single-, twin- or multi-screw extruder, more preferably a twin screw extruder and most preferably a co-rotating, self wiping twin screw extruder.

Preferably, the polymer solution is prior to entering the mechanical degassing device subjected to concentration through subjecting the polymer solution to distillation.

In a further preferred embodiment the polymer solution is prior to entering the mechanical degassing device subjected to concentration by passing the polymer solution through a heat exchanger with a wall temperature between 150°C to 220°C, preferably 170°C to 200°C to reach a temperature from 110°C to 180°C, preferably 130°C to 160°C.

In a further embodiment the polymer solution is prior to entering the mechanical degassing device subjected to concentration by heating the solution in an evaporation pipe where the wall temperature of the evaporation pipe is kept between 150°C to 220°C, preferably 170°C to 200°C.

In a further preferred embodiment the polymer exiting the mechanical degassing device is passed through a sieve with preferred mesh width of between 10 and 100 micrometers, preferably between 20 and 50 micrometers.

Preferably, the polymer exiting the sieve is subjected to a polymer cooling, to cool the polymer down to 160°C to 100°C, with a wall temperature between 150°C and 90°C, wherein polymer cooler is of a static-mixer type.

The process for isolation of the low molecular weight (H)NBR having a molecular weight M_{w} of up to 50,000 g/mol and a polydispersity index of < 2.0 therefore comprises the following steps:
(i) distillation of a (H)NBR solution obtained after metathesis of NBR and an optional subsequent hydrogenation by solvent distillation to have a concentration of (H)NBR in the range of from 15 to 60 % by weight, preferably 20 to 50 % by weight, more preferably 25 to 40 % by weight of the total solution;
(ii) pre-concentration of the distilled (H)NBR solution obtained in step (i) to a concentration of 50 to 80 % by weight of the total solution; and optionally heating of the pre-concentrated polymer solution;
(iii) mechanically degassing the polymer solution obtained in step (ii);
(iv) pumping the mechanically degassed polymer solution obtained in step (iii) through a sieve, preferably having a mesh width of from 10 to 100 micrometer, preferably from 20 to 50 micrometer; and optionally cooling the polymer obtained after sieving with a polymer cooler; and
(v) discharging the polymer obtained in step (iv), preferably by discharging into trays or by forming the polymer into bales.

The isolated optionally hydrogenated nitrile rubber obtained after the isolation process according to the present invention, comprises a solvent residue, especially an organic solvent residue, of less than 2000 ppm, preferably less than 1000 ppm and even more preferably less than 500 ppm.

### (i) Distillation

The (H)NBR polymer solution coming from metathesis is concentrated through solvent distillation to have a concentration of (H)NBR in the range of from 15 to 60% by weight, more preferably in the range of from 20 to 50% by weight and most preferably in the range of from 25 to 40% by weight of the total mixture.

### (ii) Pre-concentration

The evaporation starting from the solvent distillation is advantageously carried out in several steps, one comprising a pre-concentration to 50% to 80% weight of the total mixture and the next step in achieving the desired residual solvent levels.

In one preferred method of carrying out the pre-concentration, the polymer solution after the distillation step is heated in an evaporation pipe. The inlet pressure of the pipe is low enough (between 0,5 and 6 bar abs., preferably between 1 and 4 bar) in that pipe so that the solution starts to evaporate partially at the walls, leading to a drop in temperature and increased temperature. The wall temperature of the evaporation pipe is also kept between 150°C to 220°C, preferably 170°C to 200°C.

The evaporation pipe discharges the product into a separation vessel, in which the vapours separate from the concentrated polymer solution. The pressure in that separation vessel is kept between 200 mbar abs. and 0,5 bar abs, preferably between 100 mbar abs. and 1 bar abs. There are two outlets to the separation vessel: one for the vapours and one for the concentrated polymer solution. The vapour outlet is connected to a condenser and a vacuum pump. At the outlet for the concentrated polymer solution, situated at the bottom of the separation vessel, a gear pump or an extruder is employed for removing the concentrated polymer solution, preferably a gear pump. The polymer concentration reaches 50% to 80% at the outlet with the temperature dropping to 80 to 150°C, preferably 100 to 130°C due to evaporation of the solvent.

In another preferred method of carrying out the pre-concentration, the polymer solution after the distillation step is treated in a "flash step". In this stage, the solution is pumped through a heat exchanger with a wall temperature between 150°C to 220°C, preferably 170°C to 200°C to reach a temperature from 110°C to 180°C, preferably 130°C to 160°C. The heat exchanger may be a shell-and-tube heat exchanger, a plate heat exchanger or a static mixer heat exchanger; a static mixer heat exchanger is preferred. The polymer solution is then flashed into an separation vessel by means of a flashing valve. The pressure before the flashing valve is controlled so that the polymer solution does not boil in the heat exchanger. The pressure in the separation vessel is kept between 200 mbar abs. and 0,5 bar abs, preferably between 100 mbar abs and 1 bar abs. There are two outlets to the separation vessel: one for the vapours and one for the concentrated polymer solution. The vapour outlet is connected to a condenser and a vacuum pump. At the outlet for the concentrated polymer solution, situated at the bottom of the separation vessel, a gear pump or an extruder is employed for removing the concentrated polymer solution, preferably a gear pump.

The process of treating the polymer in a flash step is advantageously carried out several times in sequence. The preferred number of flash steps is two or three, most preferred is two.

After pre-concentration, the concentrated polymer solution is preferably heated in another heat exchanger, preferably a static-mixer design, with a wall temperature between 150°C and 220°C, preferably between 170°C and 200°C , to a temperature of between 110°C and 180°C, preferably between 130°C and 160°C .

### (iii) Mechanical degassing

The polymer solution is then discharged into a mechanical degassing device. One preferred option of the mechanical degassing device is an extruder. Single-screw, twin-screw or multi-screw extruders may be used for this purpose; preferred is a twin-screw extruder and especially preferred a co-rotating, self-wiping twin screw extruder. The extruder is equipped with a rear vent, where the polymer flashes into the extruder barrel and vapours separate from the polymer solution which then travel in the opposite direction from the conveying direction of the extruder. The pressure in the rear vent is between 5 and 150 mbar abs, preferably between 10 and 100 mbar abs.

The extruder is also equipped with several other vents, through which additional vapours may be separated from the polymer. These vents are operated at lower pressure, between 0,5 and 20 mbar abs, preferably between 1 and 10 mbar abs. In order to avoid gas leakage between these vents, liquid seals formed by the polymer are employed, which are caused by back-pumping sections of the extruder which cause a section to be fully-filled with polymer. The wall temperature of the extruder is between 150°C and 220°C, preferably between 170°C and 200°C with its turning speed between 200/min and 600/min, preferably between 200/min and 600/min. Residence time in the extruder is between 10 seconds and 300 seconds, preferably between 30 seconds and 180 seconds.

Another option of a mechanical degassing device is a large-volume continuous kneader. This kneader may be single-shaft or twin-shaft, a twin shaft kneader may be either co-rotating or counter-rotating. Such a kneader is differentiated from an extruder by having longer residence times, between 300 seconds and 7200 seconds, preferably between 600 seconds and 3600 seconds, by having only a single pressure zone, a much larger surface area than an extruder and a much greater capability of heat transfer due to it larger areas. Examples of such kneaders are the List CRP or the Buss-SMS Reasoll.

The pressure in the kneader is kept between 0.5 and 20 mbar abs, preferably between 1 and 10 mbar abs. The wall temperature of the kneader is between 130°C and 200°C, preferably between 150°C and 180°C. Turning speed is between 10 and 300/min, preferably between 50 and 200/min.

### (iv) Sieving

Following the mechanical degassing device, there is a gear pump for increasing pump and a sieve for removing impurities from the polymer. The sieve has a preferred mesh width of from 10 and 100 micrometer, preferred from 20 and 50 micrometers. After the sieve, there is a preferred option to cool the polymer with a polymer cooler. The polymer cooler cools the polymer down to 160°C to 100°C, with a wall temperature between 150°C and 90°C. Preferably, this cooler is of static-mixer type.

### (v) Discharging

After sieving or optionally after the cooler, the product is discharged, preferably by discharging the product into trays or forming the product into bales.

The method of heating of any of the heat exchangers can be electrical or through a condensing or liquid heating medium. As condensing heating medium, steam is preferred. As liquid heating medium, organic heat transfer liquids suitable to the temperature of the process are preferred. Such heat transfer liquids are generally well-known and commercially available, and can themselves be heated either electrically or though a condensing medium. Cooling can be done by a liquid medium, preferably pressurized water or an organic heat transfer liquid.

### Component (ii): Cross-linking agent

The vulcanizable composition according to the present invention mandatorily comprises at least one cross-linking agent. The cross-linking agent is not limited to any special cross-linking agent. Suitable cross-linking agents are for example peroxide curing systems, sulfur curing systems, amine curing systems, UV based curing systems, polyvalent epoxy curing systems, polyvalent isocyanate curing systems, aziridine curing systems, basic metal oxide curing systems or organometallic halide curing systems. Preferred curing systems are peroxide curing systems, sulfur curing systems, amine curing systems or UV curing systems. A particularly preferred cross-linking agent or curing system is a peroxide system.

### Component (v): Hydrogenated nitrile rubber

The inventive vulcanizable polymer composition comprises hydrogenated nitrile rubbers being different from the optionally hydrogenated nitrile rubbers incorporated as component (i). These hydrogenated nitrile rubbers being different from the optionally Hydrogenated nitrile rubbers incorporated as component (i) are also referred to as component (v) in the vulcanizable polymer composition. Such other hydrogenated nitrile rubbers (hereinafter referred to as "higher molecular weight Hydrogenated nitrile rubbers") in principle adhere to the same definitions as described above with regard to the different monomers used to prepare the optionally hydrogenated nitrile rubbers, but differ with regard to the molecular weight M_{w}, this being higher than 50,000 g/mol, and/or the polydispersity index which is also higher than 2.0. Such higher molecular weight hydrogenated nitrile rubbers are commercially available in form of various grades marketed by Lanxess Deutschland GmbH under the trademark Therban® or by Zeon Corporation under the trademark Zetpol®. It is e.g. possible to use a blend of component (i) with one or more hydrogenated nitrile rubbers (v) having a Mooney viscosity (ML 1+4 at 100°C) in the range of from 30 to 150, preferably in the range of from 60 to 125, and a polydispersity index in the range of from 2.5 to 6.0, preferably in the range of from 2.9 to 5.0 and more preferably in the range of from 2.9 to 3.5.

### Peroxide curing system

The present invention is not limited to a special peroxide curing system. For example, inorganic or organic peroxides are suitable. Useful organic peroxides include dialkylperoxides, ketalperoxides, aralkylperoxides, peroxide ethers, peroxide esters such as di-tert.-butylperoxide, 2,2'-bis-(tert.-butylperoxyisopropyl)-benzene, dicumylperoxide, 2,5-dimethyl-2,5-di(tert.-butylperoxy)-hexane, 2,5-dimethyl-2.5-di(tert.-butylperoxy)-hexene-(3), 1,1-bis-(tert.-butylperoxy-3,3,5-trimethyl-cyclohexane, benzoylperoxide, tert.-butyl-cumylperoxide and tert.-butylperbenzoate.

Usually, the amount of peroxide in the vulcanizable composition is in the range of from 1 to 10 phr (= parts per hundred parts of rubber), preferably 1 to 8 phr. In case the peroxide is used on solid state supports, the aforementioned amount relates to the amount of the active peroxide.

The peroxide curing system may be introduced in a pure form, or advantageously on a variety of solid state supports, for example calcium oxide, clay or silica. The peroxide curing system might be applied advantageously in a polymer-bound form. Suitable systems are commercially available, such as Polydispersion T(VC) D-40 P from Rhein Chemie Rheinau GmbH, D (= polymer bound di-tert.-butylperoxy-isopropylbenzene).

Curing with peroxide curing systems is usually performed at a temperature in the range of from 100 to 200 °C, preferably 130 to 180 °C.

### Amine curing system

As amine curing system usually a polyamine cross-linking agent is used, preferably in combination with a crosslinking accelerator. There is no limitation to the use of a special polyamine cross-linking agent or cross-linking accelerator.

The polyamine cross-linking agent is not restricted in particular as long as the said agent is (1) a compound having two or more amino groups or (2) a species that forms a compound having two or more amino groups during cross-linking in-situ. However, a compound wherein a plurality of hydrogens of an aliphatic hydrocarbon or aromatic hydrocarbon have been replaced by amino groups or hydrazide structures (a structure represented by "-CONHNH₂", wherein CO denotes carbonyl group) is preferred.

As examples of polyamine cross-linking agents (ii), the following shall be mentioned:
- an aliphatic polyamine, preferably hexamethylene diamine, hexamethylene diamine carbamate, tetramethylene pentamine, hexamethylene diamine-cinnamaldehyde adduct, or hexamethylene diamine-dibenzoate salt;
- an aromatic polyamine, preferably 2,2-bis (4-(4-aminophenoxy) phenyl) propane, 4,4'-methylenedianiline, m-phenylenediamine, p-phenylenediamine, or 4,4'-methylene bis (o-chloroaniline);
- compounds having at least two hydrazide structures, preferably isophthalic acid dihydrazide, adipic acid dihydrazide, or sebacic acid dihydrazide.

Among these, an aliphatic polyamine is preferred, and hexamethylene diamine carbamate is particularly preferred.

The content of the polyamine cross-linking agent in the vulcanizable polymer composition is in the range of from 0.2 to 20 parts by weight, preferably in the range of from 1 to 15 party by weight, more preferably of from 1.5 to 10 parts by weight based on 100 parts by weight of the nitrile rubber.

The cross-linking accelerator may be any cross-linking accelerator known in the art, for example a basic crosslinking accelerator, preferably being a guanidine crosslinking accelerator such as tetramethylguanidine, tetraethylguanidine, diphenylguanidine, di-o-tolylguanidine, o-tolylbiguanidine and a di-o-tolylguadinine salt of dicathecolboric acid; or aldehydeamine crosslinking accelerators such as n-butylaldehydeaniline, acetaldehydeammonnia and hexamethylenetetramine, whereby a guanidine crosslinking accelerator, especially DOTG (Di-o-tolyl guanidin), is preferred.

In another preferred embodiment of the present invention the cross-linking accelerator is at least one bi- or polycyclic aminic base. Preferably, the bi- or polycyclic aminic base is selected from the group consisting of 1,8-diazabicyclo[5.4.0]undec-7-ene (DBU), 1,5-diazabicyclo[4.3.0]-5-nonene (DBN), 1,4-diazabicyclo[2.2.2]octane (DABCO), 1,5,7-triazabicyclo[4.4.0]dec-5-ene (TBD), 7-methyl-1,5,7-triazabicyclo[4.4.0]dec-5-ene (MTBD) and its derivatives.

The bi- or polycyclic aminic bases can be prepared by methods known in the art. The preferred bases mentioned in the present invention are commercially available.

In one embodiment of the present invention a bi- or polycyclic aminic base is used having a pK_{b}-value (measured in DMSO) in the range of from -2 to +12.

The content of basic cross-linking accelerators in the vulcanizable polymer composition is usually in the range of 0.5 to 10 parts by weight, preferably 1 to 7.5 parts by weight, more preferably 2 to 5 parts by weight, based on 100 parts by weight of the optionally hydrogenated nitrile rubber (component (i)).

Curing with amine curing systems is preferably performed by heating the vulcanizable polymer composition to a temperature in the range of from 130° to 200°C, preferably from 140° to 190°C, more preferably from 150° to 180°C. Preferably, the heating is conducted for a period of from 1 minutes to 15 hours, more preferably from 5 minutes to 30 minutes.

It is possible and in some cases recommendable to perform a so-called post-curing at temperature in the range of from 130° to 200°C, preferably from 140° to 190°C, more preferably from 150° to 180°C for a period of up to 15 hours which is performed outside the die, e.g. by placing the vulcanizate, i.e. the respective form part, in a standard oven.

### UV curing system

Suitable UV curing systems are known in the art. In the UV curing system usually a photosensitizer (photopolymerization initiator) is used. Examples of photosensitizers include benzoin, benzophenone, benzoin methyl ether, benzoin ethyl ether, benzoin isopropyl ether, benzoin isobutyl ether, dibenzyl, 5-nitroacenaphthene, hexachlorocyclopentadiene, p-nitrodiphenyl, p-nitroaniline, 2,4,6-trinitroaniline, 1,2-benzanthraquinone, 3-methyl-1,3-diaza-1,9-benzanthrone. The photosensitizers can be usd singly or in combination of two or more of them.

The photosensitizer is generally used in an amount of 0.1 to 5 parts b.w., preferably 0.1 to 2 parts b.w., more preferably 0.1 to 1 parts b.w. based on 100 parts b.w. of the nitrile rubber.

### Sulfur curing system

Sulfur curing is usually carried out with elemental sulfur or sulfur containing vulcanizing agents known in the art. Said sulfur containing vulcanizing agents usually contain sulfur in a heat-labile form. They liberate sulfur at the curing temperature (sulfur donors).

Sulfur donors can be subdivided into those that can be substituted directly for sulfur, without drastic change of the curing characteristics, and those that are simultaneously vulcanization accelerators. Products of the first type are for example dithiodimorpholine, caprolactamdisulfide, and N,N'-dithio-bis-(hexahydro-2H-azepinone). For sulfur donors that are at the same time vulcanization accelerators, the vulcanization system has to be properly modified, known by a person skilled in the art. Examples of sulfur donors that are at the same time vulcanization accelerators are 2-morpholino-dithio-benzothiazole, dipentamethylene thiuramtetrasulfide, N-oxydiethylene dithiocarbamyl-N'-oxyoxydiethylene sulfenamide as well as tetramethyl thiuram disulfide.

Preferred sulfur containing vulcanizing agents are benzothiazol disulfide, e.g. Vulkacit® DM/C, tetramethyl thiuram monosulfide, e.g. Vulkacit® Thiuram MS/C, tetramethyl thiuram disulfide, e.g. Vulkacit® Thiuram/C and mixtures thereof..

Sulfur or sulfur donors are used as curing agent usually in an amount of 0.25 to 5 parts by weight based on 100 parts by weight of the nitrile rubber, preferably 1.5 to 2.5 parts by weight based on 100 parts by weight of the nitrile rubber.

Usually, the sulfur or sulfur containing vulcanizing agents are used together with a vulcanization accelerator. Suitable vulcanization accelerators are known in the art. Examples are mercapto accelerators, sulfenamide accelerators, thiuram accelerators, dithiocarbamate accelerators, dithiocarbamylsulfenamide accelerators, xanthate accelerators, guanidine accelerators, amine acceleratorsthiourea accelerators, dithiophosphate accelerators and sulfur donors.

The vulcanization accelerators are usually employed in an amount of 0.5 to 1 parts by weight based on 100 parts by weight of the nitrile rubber. When the accelerator dosage is increased (for example 1.5 to 2.5 parts by weight based on 100 parts by weight of the nitrile rubber), the sulfur content should preferably be lowered.

### Optional component (iii): Filler

In a preferred embodiment the vulcanizable polymer composition further comprises at least one filler. Useful fillers may be active or inactive fillers or a mixture of both. The filler may be, for example:
- highly dispersed silicas, prepared e.g. by the precipitation of silicate solutions or the flame hydrolysis of silicon halides, preferably with specific surface areas in the range of from 5 to 1000 m²/g, and with primary particle sizes in the range of from 10 to 400 nm; the silicas can optionally also be present as mixed oxides with other metal oxides such as those of Al, Mg, Ca, Ba, Zn, Zr and Ti;
- synthetic silicates, such as aluminium silicates and alkaline earth metal silicates like magnesium silicate or calcium silicate, preferably with BET specific surface areas in the range of from 20 to 400 m²/g and primary particle diameters in the range of from 10 to 400 nm;
- natural silicates, such as kaolin and other naturally occurring silicates;
- glass fibers and glass fiber products (matting extrudates) or glass microspheres;
- metal oxides, such as zinc oxide, calcium oxide, magnesium oxide and aluminium oxide;
- metal carbonates, such as magnesium carbonate, calcium carbonate and zinc carbonate;
- metal hydroxides, e.g. aluminium hydroxide and magnesium hydroxide;
- carbon blacks; the carbon blacks to be preferably used in the composites according to the present invention are prepared by the lamp black, furnace black or gas black process and have preferably BET (DIN 66 131) specific surface areas in the range of from 20 to 200 m²/g, e.g. SAF, ISAF, HAF, FEF or GPF carbon blacks;
- rubber gels, especially those based on polybutadiene, butadiene/styrene copolymers, butadiene/acrylonitrile copolymers and polychloroprene; or mixtures thereof.

Examples of suitable mineral fillers include silica, silicates, clay such as bentonite, gypsum, alumina, titanium dioxide, talc, mixtures of these, and the like. These mineral particles have hydroxyl groups on their surface, rendering them hydrophilic and oleophobic. This exacerbates the difficulty of achieving good interaction between the filler particles and the rubber. For many purposes, the mineral can be silica, for example, silica made by carbon dioxide precipitation of sodium silicate. Dried amorphous silica particles suitable for use in accordance with the present invention may have a mean agglomerate particle size in the range of from 1 to 100 microns, for example between 10 and 50 microns or, for example between 10 and 25 microns. According to the present invention less than 10 percent by volume of the agglomerate particles should be below 5 microns or over 50 microns in size. A suitable amorphous dried silica moreover usually has a BET surface area, measured in accordance with DIN (Deutsche Industrie Norm) 66131, of in the range of from 50 and 450 square meters per gram and a DBP absorption, as measured in accordance with DIN 53601, of in the range of from 150 and 400 grams per 100 grams of silica, and a drying loss, as measured according to DIN ISO 787/11, of in the range of from 0 to 10 percent by weight. Suitable silica fillers are available under the trademarks HiSil® 210, HiSil® 233 and HiSil® 243 from PPG Industries Inc. or as Vulkasil® S and Vulkasil® N, from Lanxess Deutschland GmbH.

Often, use of carbon black as filler is advantageous. Usually, carbon black is present in the polymer composite in an amount of in the range of from 20 to 200 parts by weight, for example 30 to 150 parts by weight, or for example 40 to 100 parts by weight. Further, it might be advantageous to use a combination of carbon black and mineral filler in the inventive polymer composite. In this combination the ratio of mineral fillers to carbon black is usually in the range of from 0.05 to 20, or for example 0.1 to 10.

### Optional components (iv): Other auxiliary products for rubbers

Further auxiliary products which may be used in the vulcanizable polymer compositions are for example reaction accelerators, vulcanization accelerators, vulcanization acceleration auxiliaries, vulcanization co-agents which can influence both the cure characteristics and physical properties of the vulcanizate, in particular the crosslinking density, antioxidants, foaming agents, anti-aging agents, heat stabilizers, light stabilizers, ozone stabilizers, processing aids, plasticizers, tackifiers, blowing agents, dyestuffs, pigments, waxes, extenders, organic acids; inhibitors, metal oxides, and activators such as triethanolamine, polyethylene glycol, or hexanetriol.

The further auxiliary products for rubbers (rubber aids) are used in conventional amounts, which depend inter alia on the intended use. Conventional amounts are e.g. from 0. 1 to 50 wt. %, based on rubber. For example, the vulcanizable polymer composition can contain in the range of 0.1 to 20 phr of an organic fatty acid as an auxiliary product, such as a unsaturated fatty acid having one, two or more carbon double bonds in the molecule which can include 10% by weight or more of a conjugated diene acid having at least one conjugated carbon-carbon double bond in its molecule. For example, those fatty acids have in the range of from 8-22 carbon atoms, or for example 12-18. Examples include stearic acid, palmitic acid and oleic acid and their calcium-, zinc-, magnesium-, potassium- and ammonium salts.

The vulcanizable polymer composition of the present invention may contain so called vulcanization co-agents which serve to improve the curing characteristics and physical properties of the vulcanizate, in particular such materials may enhance the degree of crosslinking and result in an increased cross-linking density. In this regard the polymer composition can contain in the range of 0,1 to 50 phr, preferably 5 to 50 phr of an acrylate or methacylate as an auxiliary product. Suitable acrylates and methacrylates are known from EP-A1-0 319 320**,** in particular p. 3, 1. 16 to 35, from US-A-5,208,294**,** Col. 2, 1. 25 to 40, and from US-A-4,983,678**,** Col. 2, 1. 45 to 62. Specific reference is also made to zinc acrylate, zinc diacrylate, zinc methacrylate, zinc dimethacrylate, or a liquid acrylate, such as trimethylolpropanetrimethacrylate (TRIM), butane-dioldimethacrylate BDMA) and ethyleneglycol-dimethacrylate (EDMA). It might be advantageous to use a combination of different acrylates and/or metal salts thereof. For example, to use metal acrylates in combination with a Scorch-retarder such as sterically hindered phenols (e.g. methyl-substituted aminoalkylphenols, in particular 2,6-di-tert.-butyl-4-dimethyl-aminomethylphenol).

The composition can contain in the range of 0.1 to 50 phr of other vulcanization co-agents like e.g. Triallylisocyanurate (TAIC), N,N'-1,3-Phenylene bismaleimide or high vinyl content butadiene homopolymers or copolymers which serve as vulcanization coagents to enhance the degree of crosslinking of peroxide cured articles.

### Incorporation of further Rubber Components:

The vulcanizable polymer composition may advantageously also contain other natural or synthetic rubbers, including but not limited to BR (polybutadiene), ABR (butadiene/acrylic acid-C₁-C₄-alkylester-copolymers), CR (polychloroprene), IR (polyisoprene), IIR (isobutylene/isoprene-copolymers and derivatives thereof like e.g. halogenated and/or ionic groups containing and/or branched derivatives thereof), isobutylene/paramethylstyrene copolymers and derivatives there of, SBR (styrene/butadiene-copolymers), preferably with styrene contents in the range of 1 to 60 wt %, EPDM (ethylene/propylene/diene-copolymers), FKM (fluoropolymers or fluororubbers), and mixtures of the given polymers. These additional one or more natural or synthetic rubbers are also referred to as optional component (v) in the vulcanizable polymer composition. Careful blending with said rubbers often reduces cost of the polymer composite without sacrificing the processability. The amount of natural and/or synthetic rubbers will depend on the process condition to be applied during manufacture of shaped articles and is readily available by few preliminary experiments.

The ratio of higher molecular weight hydrogenated nitrile rubbers (v) to component (i) in the vulcanizable polymer composition will directly influence the overall viscosity of the vulcanizable polymer composition as well as the molecular weight distribution itself. Thus it is possible to tailor-make blends with specific processability and performance properties.

It is preferred that the inventive vulcanizable polymer composition comprises
(i) in the range of from 0.01 to 70 wt.% of at least one optionally hydrogenated nitrile rubber having a weight average molecular weight Mw of 50,000 g/mol or less and a polydispersity index of less than 2.0, and in particular in the range of from 8 to 33 wt.% (based on the weight of both, i.e. component (i) and the higher molecular weight hydrogenated nitrile rubber component(s) (v)) and
(vi) in the range of from 99.9 to 30 wt.% of the higher molecular weight hydrogenated nitrile rubber component(s) (v), in particular in the range of from 92 to 67 wt.% (also based on the weight of both, i.e. components (i) and the higher molecular weight hydrogenated nitrile rubber component(s) (v)).

In an even more preferred embodiment the inventive vulcanizable polymer composition comprises
(i) in the range of from 0.01 to 70 wt.%, in particular of from 8 to 33 wt.%, of at least one hydrogenated nitrile rubber having a weight average molecular weight M_{w} of 50,000 g/mol or less and a polydispersity index of less than 2.0 and
(v) in the range of from 99.9 to 30 wt.%, in particular of from 92 to 67 wt.%, of one or more hydrogenated nitrile rubber components having a Mooney viscosity (ML 1+4 at 100°C) in the range of from 30 to 150, preferably in the range of from 60 to 125, and a polydispersity index in the range of from 2.5 to 6.0, preferably in the range of from 2.9 to 5.0 and more preferably in the range of from 2.9 to 3.5,
wherein the aforementioned wt.% are always based on the sum of weight of both, i.e. component(s) (i) and the hydrogenated nitrile rubber component(s) (v).

The blending technique is thought not to be crucial. Therefore every blending technique of polymers with different viscosities known to those skilled in the art will be suitable. However, it is preferred to blend the higher molecular weight hydrogenated nitrile rubber(s) with the component(s) (i) in solution. In one embodiment, a solution of the higher molecular weight hydrogenated nitrile rubber(s) (v) is added to a solution of component(s) (i), optionally the resulting mixture is then mixed and the polymer blend recovered by known techniques, such as steam coagulation. Optionally there will be further process steps such as steam stripping or drying, e.g. on a mill. In another embodiment the higher molecular weight hydrogenated nitrile rubber(s) (v) are dissolved in a solution comprising the component (i) rubber(s), optionally the resulting mixture is then mixed and the polymer blend recovered by known techniques, such as steam coagulation. Optionally there will be further process steps such as steam stripping or drying, e.g. on a mill. In still another embodiment the component (i) rubber(s) are dissolved in a solution comprising the higher molecular weight hydrogenated nitrile rubber(s) (v), optionally the resulting mixture is then mixed and the polymer blend recovered by known techniques, such as steam coagulation. Optionally there will be further process steps such as steam stripping or drying, e.g. on a mill. Obviously, there are many more ways, such as dissolving the component (i) rubber(s) in a mixture of the component (i) rubber(s) with the higher molecular weight hydrogenated nitrile rubber(s), which are well within the scope of the present invention without explicit mention in this specification.

Vulcanizates obtained from inventive vulcanizable polymer compositions comprising not only component (i) as low molecular weight rubber component(s), but also at least one higher molecular weight hydrogenated nitrile rubber(s) (v) as defined above dispose of an advantageous low heat-build-up. This effect is observed by measurements using the BF Goodrich test according to DIN 53533. A low heat-build-up means that the vulcanizates may be exposed to increased dynamical stress without deterioration of the property profile. For many applications it is desirable to have a reduced heat build up. For example, a reduced heat build up is an advantage for use in dynamic applications such as found in the automotive (timing or conveyor belts, seals, gaskets, bearing pads), electrical (cable sheathing), mechanical engineering (wheels, rollers) and ship building (pipe seals, couplings) industries amongst others. It is known to a person skilled in the art that high viscosity polymers with long polymer chains show a low heat-build-up while low viscosity polymers typically show a higher heat-build-up. If the inventive vulcanizable polymer compositions contain a blend of component(s) (i) and higher molecular weight hydrogenated nitrile rubber(s) (v), the expected increase in the heat-build-up (i.e. expected due to the additional presence of the low viscosity component (i)) is surprisingly not observed compared to higher molecular weight hydrogenated nitrile rubber(s). It is just the opposite, the aforementioned blends with the inventive HNBRs show even a lower heat-build up than vulcanizable polymer compositions based on non-inventive HNBRs only.

Additionally cured articles based on blends including inventive HNBRs show similar hot air ageing and oil immersion properties compared to cured articles based on blends having identical composition and only lacking the low viscosity HNBRs. So there is not a negative effect on the properties of cured articles formed when using inventive low viscosity HNBRs. There is even a slight improvement upon swelling the cured articles in IRM 903.

Vulcanizable compositions not containing a low viscosity inventive HNBR would typically require the incorporation of substantial amounts of plasticizers or other additives to obtain the same tailor-make blends with an excellent processability and later on cured articles with the same advantageous performance properties. Such plasticizers, however, will always result in a substantially increased leach-out when immersing cured articles based on such compositions in IRM 901 oils.

Without being bound to any theory the positive results of the oil immersion testing show that the low viscosity inventive HNBR and the higher molecular weight hydrogenated nitrile rubbers are curing together to form one network structure. This was a surprising result as one would have expected that the low viscosity inventive HNBR would be extracted out as a low molecular weight, soluble material from the matrix. Hence the low viscosity inventive HNBR and the higher molecular weight hydrogenated nitrile rubbers are excellently miscible. The low viscosity inventive HNBR therefore acts as a co-curable plasticizer.

Hence, cured articles based on blends including the inventive HNBR possess a clear advantage compared to cured articles according to the state of the art.

### Preparation of the vulcanisable polymer composition:

The vulcanizable polymer composition is prepared by mixing the mandatory ingredients, i.e. the low molecular weight optionally hydrogenated nitrile rubber (i) and the at least one cross-linking agent (ii), as well as optionally the filler (iii) and optionally the further auxiliary compounds (iv) together, suitably at an elevated temperature that may range from 25 °C to 200 °C. Optionally the Normally the mixing time does not exceed one hour and a mixing time in the range from 2 to 30 minutes is usually adequate. If the vulcanizable polymer composition is prepared without solvent or was recovered from the solution, the mixing can be suitably carried out in an internal mixer such as a Banbury mixer, or a Haake or Brabender miniature internal mixer. A two-roll mill also provides a good dispersion of the additives within the elastomer. An extruder also provides good mixing, and permits shorter mixing times. Also, due in part to the viscosity of the optionally hydrogenated nitrile rubber (i) as well as of the resulting vulcanizable polymer compositions various mixing equipment specific to low viscosity compounds can be used. For example, a Press Mixer, 'Z-Blade' mixer, or Planetary Roller Extruders can be used for low to medium viscosity compounds to achieve optimal mixing. Furthermore, it is possible to carry out the mixing in two or more stages, and the mixing can be done in different apparatus, for example one stage in an internal mixer and one stage in an extruder. However, it should be taken care that no unwanted pre-crosslinking (=scorch) occurs during the mixing stage. For compounding and vulcanization see also: Encyclopedia of Polymer Science and Engineering, Vol. 4, p. 66 et seq. (Compounding) and Vol. 17, p. 666 et seq. (Vulcanization).

Due to the low viscosity of the optionally hydrogenated nitrile rubber component (i) as well as of the vulcanizable polymer composition comprising such component (i), the novel polymer composition is ideally suited to be processed by, but not limited to, moulding injection technology and in particular liquid injection moulding technology. The vulcanizable polymer composition according to the present invention can also be processed by transfer moulding, or compression moulding. The novel low viscosity vulcanizable polymer composition is typically introduced in a conventional injection moulding and injected into hot (about 160-230°C) forms where the cross-linking/vulcanization takes place depending on the polymer composite and temperature of the mould resulting in the respective vulcanizate.

The vulcanizable polymer composition according to the present invention is very well suited for the manufacture of vulcanizates in the form of a shaped article, such as a seal, hose, bearing pad, stator, well head seal, valve plate, wire and cable sheathing, wheel roller, pipe seal, in place gaskets or footwear component. The vulcanizates in the form of said shaped articles are preferably prepared by injection moulding technology, more preferably liquid injection moulding, compression moulding, transfer moulding, pressure free curing or combinations thereof. Furthermore, the vulcanizable polymer composition is very well suited for wire and cable production, especially via extrusion processes. The present invention therefore further relates to vulcanizates obtainable by curing the novel low viscosity polymer compositions.

The present invention also relates to the use of the optionally hydrogenated nitrile rubber according to the present invention or the vulcanizable polymer composition according to the present invention for the preparation of vulcanizates.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

### EXAMPLES:

### A) PREPARATION EXAMPLES

| | |
|---|---|
| **Cement Concentration*** | 15% by weight |
| **Co-Olefin** | 1-Hexene |
| **Co-Olefin Concentration** | 4 phr |
| **Metathesis Catalyst** | 1,3-bis-(2,4,6-trimethylphenyl)-2-imidazolidinylidene) (tricyclohexylphosphine)-Ruthenium(phenyl methylene) dichloride (Grubb's 2^{nd} Generation catalyst (NGG)) (Materia Inc., U.S.A.) |
| **Hydrogenation Catalyst** | tris-(triphenylphosphine) rhodium chloride (Wilkinson's catalyst) (Umicore AG, Germany) |
| **Catalyst Loading** | See Tables 1, 2 and 3 |
| **Solvent** | Monochlorobenzene (MCB) |
| **Perbunan^{®} T3429 (Control #1)** | statistical butadiene-acrylonitrile copolymer with an acrylonitrile content of 34 mol% and a Mooney viscosity (ML (1+4) at 100 °C) of 29 MU. (Lanxess Deutschland GmbH, Germany) |
| **Perbunan^{®} T3435 (Control #2)** | statistical butadiene-acrylonitrile copolymer with an acrylonitrile content of 34 mol% and a Mooney viscosity (ML (1+4)at 100 °C) of 35 MU. (Lanxess Deutschland GmbH, Germany) |

| | |
|---|---|
| * "Cement Concentration" means the concentration of the nitrile rubber in the reaction mixture. | |

The progress of the reaction was monitored using GPC in accordance with DIN 55672-1.

### EXAMPLES 1 - 4:

75 g of Perbunan^{®} T3429 was dissolved in 500g monochlorobenzene in a 1L vessel. Upon complete dissolution of the nitrile rubber 4phr of 1-Hexene was added to the vessel and the solution was agitated for 2h upon which 1,3-bis-(2,4,6-trimethylphenyl)-2-imidazolidinylidene) (tricyclohexylphosphine)-Ruthenium (phenyl-methylene) dichloride was dissolved in 20mL of MCB and was added to the 1L vessel. The reaction mixture was allowed to react for a period of 12h at a temperature of 22°C while being agitated. After the set time allotment was complete, the solution submitted for GPC analysis.

**Table 1:**

| | **Metathesis Catalyst (phr)** | **Mₙ (g/mol)** | **M_{w} (g/mol)** | **PDI** |
|---|---|---|---|---|
| **Control #1** | - | 69,000 | 217,500 | 3.15 |
| **Example 1** | 0.04 | 24,500 | 48,000 | 1.96 |
| **Example 2** | 0.06 | 19,000 | 35,500 | 1.84 |
| **Example 3** | 0.08 | 16,000 | 29,500 | 1.77 |
| **Example 4** | 0.1 | 15,000 | 25,500 | 1.73 |

### EXAMPLES 5-6:

700 g of Perbunan^{®} T 3435 was dissolved in 4667g monochlorobenzene in a 10L high pressure reactor. Upon complete dissolution of the nitrile rubber, 4phr of 1-Hexene was added to the reactor and the solution was agitated for 2h at 22°C upon which time an MCB solution of 1.3-bis-(2,4,6-trimethylphenyl)-2-imidazolidinylidene) (tricyclohexylphosphine)-Ruthenium (phenyl-methylene) was added to the reactor. The solution was than allowed to agitate at 22°C for a period of 2h.

On completion of the metathesis reaction the reactor was charged with an MCB solution of tris-(triphenylphosphine) rhodium chloride (0.06phr) and the reactor pressurized with hydrogen to 85bar. The reaction mixture was allowed to react for a period of 4h at a temperature of 138°C while being agitated (600rpm) at which time a hydrogenated nitrile rubber solution was obtained with a level of hydrogenation <0,9%. Following the hydrogenation the solution was worked using a process wherein the rubber solution was heated and concentrated in a roto-vap to a concentration that could still be poured. The rubber solution was than poured onto sheets and placed in an evacuating, heated oven until the odor of MCB was no longer present.

**Table 2:**

| | | | **NBR** | | | **HNBR** | | |
|---|---|---|---|---|---|---|---|---|
| | **Metathesis Catalyst (phr)** | **Solvent Content** * **(ppm)** | **Mₙ (g/mol)** | **M_{w} (g/mol)** | **PDI** | **Mₙ (g/mol)** | **M_{w} (g/mol)** | **PDI** |
| **Control #2** | - | - | 68,000 | 238,000 | 3,51 | 69,000 | 243,000 | 3.53 |
| **Example 5** | 0.07 | 200 | 9,300 | 13,700 | 1,48 | 8,500 | 12,000 | 1.42 |
| **Example 6** | 0.01 | 1,900 | 12,700 | 21,000 | 1,67 | 11,000 | 17,500 | 1.58 |

| | | | | | | | | |
|---|---|---|---|---|---|---|---|---|
| * refers to the amount of monochlorobenzene remaining in the isolated and dried HNBR | | | | | | | | |

### EXAMPLE 7:

Example 7 was conducted using the same procedure as outlined above for Examples 5-6 with the exception that the nitrile rubber was Perbunan T 3429 versus Perbunan T 3435.

**Table 3:**

| | **Metathesis Catalyst (phr)** | **Solvent Content * (ppm)** | **Mₙ (g/mol)** | **M_{w} (g/mol)** | **PDI** |
|---|---|---|---|---|---|
| **Control #1** | - | - | 69,000 | 217,500 | 3.15 |
| **Example 7** | 0.1 | 1,300 | 19,000 | 34,000 | 1.78 |

| | | | | | |
|---|---|---|---|---|---|
| * refers to the amount of monochlorobenzene remaining in the isolated and dried HNBR. | | | | | |

### B) COMPOUNDING EXAMPLES 8 to 36

Based on the hydrogenated nitrile rubber according to **Example 7** (Mₙ 19,000g/mol; M_{w} 34,000 g/mol) the following vulcanizable polymer compositions **(Examples 8-36)** outlined in the following tables were prepared by mixing the components mentioned on either an open mill or a press mixer (as indicated). If any Examples mention "RT" this shall mean room temperature, **i.e.** 22°C±°C.

| | |
|---|---|
| **HNBR (Example 7)** | Hydrogenated nitrile rubber produced according to Ex. 7 |
| **Statex^{®} N330** | Carbon Black N330 grade, available from Columbian Carbon Deutschland |
| **Corax® N550/30, Corax^{®} N660** | Carbon Black N550 or N660 grades, available from Evonik-Degussa GmbH |
| **Luvomaxx^{®} MT N990** | Carbon Black N990 grade, available from Lehmann&Voss&Co. KG |
| **Luvomaxx^{®} N 660, Luvomaxx^{®} N 990** | Carbon Black N990 or N660 grades, available from Lehmann & Voss & Co. KG |
| **Vulkasil^{®} A1, Vulkasil^{®}N** | Mineral Filler (silica) available from LANXESS Deutschland |
| **Coupsil^{®} VP 6508** | Surface-modified precipitated silica with organosilane VP Si255, available from Evonik - Degussa GmbH |
| **Diplast TM 8-10/ST** | Trimetallic ester of linear C₈-C₁₀ alcohols, available from Lonza SpA |
| **Luvomaxx^{®} CDPA** | 4,4-Bis(1,1-dimethylbenzyl)-diphenylamine, available from Lehmann & Voss & Co. |
| **Vulkanox ZMB2/C5** | Methyl-2-mercaptobenzimidazol zinc salt, available from LANXESS Deutschland |
| **Rhenofit^{®} DDA-70** | Diphenylamine derivative, available from Rhein Chemie GmbH |
| **Mistron Vapor RP6** | Mineral filler (talc), available from Luzenac Europe SAS |
| **Lipoxol 6000** | Polyethylene glycol, available from Sasol Germany GmbH |
| **Polyglykol 4000 S** | Polyethylene glycol, available from Clariant GmbH |
| **Celite^{®} 281 SS** | Inactive mineral filler, available from Lehmann & Voss & Co KG |
| **Silitin^{®} N 87, Silitin^{®} Z 86** | Inactive mineral filler, available from Hoffmann Mineral |
| **Maglite DE** | Magnesium Oxide, available from Lehmann & Voss & Co KG |
| **CaO** | Calcium Oxide, available from Aldrich Chemie GmbH |
| **Zinkoxide Aktiv** | Zinc Oxide, available from LANXESS GmbH |
| **TAIC - 70** | Triallylisocyanurate, available from Kettlitz Chemie GmbH & Co. |
| **Rheinofit^{®} TRIM/S** | Trimethyl propylmethacrylate, available from Rheinchemie GmbH |
| **Sartomer^{®} SR 633** | Zinc diacrylate, available from Sartomer Europe |
| **Photomer^{®} 4006 F** | Trimethylpropanetriacrylate, available from Cognis Deutschland GmbH. |
| **Ricon 154 D** | Polybutadiene (high vinyl content), available from Cray Valley |
| **Tronox^{®} R-U-5** | Titaniumdioxide, available from Kerr-McGee Pigments GmbH & Co. KG |
| **Oppasin^{®} Rubin 4630** | Red Pigment, available from BASF corporation. |
| **Perkadox^{®} 14s** | Di-(tertbutylperoxyisopropyl) benzene, available from Akzo Nobel Chemicals GmbH |
| **Perkadox^{®} 14-40** | Di-(tertbutylperoxyisopropyl) benzene supported on silica& whiting, available from Akzo Nobel Chemicals GmbH, 40% active. |
| **Perkadox^{®} BC-FF** | Dicumylperoxide, available from Akzo Nobel Cehmicals GmbH |

The vulcanization behavior (MDR) was determined in accordance with ASTM D 5289 (180°C, 1°, 1.7 Hz, 60 min) with the following characteristic data being measured:

| | |
|---|---|
| S' min [dNm] | is the minimum torque of the cross-linking isotherm |
| S' max [dNm] | is the maximum torque of the cross-linking isotherm |
| S' end [dNm] | is the torque value at the end of the vulcanization |
| Delta S' [dNm] | is the difference between the S' min and S' max values |
| t50 [s] | is the time when 50% of S' max is reached |
| t90 [s] | is the time when 90% of S' max is reached |
| t95 [s] | is the time when 95% of S' max is reached. |
| TS 2 [s] | is the time when an increase of 2dNm starting from S'min is observed. |

The **tensile stress at rupture ("tensile strength")** of the vulcanizates as well as the stress values "M xxx" with "xxx" representing the percentage of elongation based on the length of the original test specimen was determined in accordance with ASTM D412-80.

**Hardness properties** were determined using a Type A Shore durometer in accordance with ASTM-D2240-81.

The determination of the **viscosity** dependence on shear rate and temperature is carried out with a Rheometer, MCR 301 (Anton Paar, Germany) with a Plate/Plate geometry, plate-diameter: 25mm.

The determination of the **Mooney viscosity (ML 1+4 at 100°C)** is carried out in accordance with ASTM standard D 1646.

The determination of the **Heat Build Up** (Goodrich Flexometer method) was determined in accordance with DIN 53,533 Part 1 + 3.

The **simulation of injection moulding of compounds** was performed using a Göttefert Rheovulcameter with an injection volume of 3,1 ccm, a barrel pressure of 50 bar at 100 °C injection.temperature. The 3,1 ccm mould was injected with a 0.4 second shot, after pre-warming the compound for 100 seconds in the barrel. The compound was then allowed to cure at 190°C for 5 min before removal and weighing. The mass of the resulting cured article was measured and the calculated fill % of the mould is presented The higher the filling percentage, the more easily the compound flows at a specific pressure and temperature

### Examples 8 and 9:

The components of the vulcanizable polymer compositions given in parts per hundred rubber (phr) (see Table 4) were mixed on an open mill by conventional mixing The polymer composition was then vulcanized at 180°C for a period of 20 minutes The properties of the polymer composites according to Table 4 are summarized in Tables 5, 6 and 7

**Table 4: Vulcanizable compositions of Examples 8 and 9**

| **Ingredients** | **Ex. 8 (phr)** | **Ex: 9 (phr)** |
|---|---|---|
| HNBR (Ex. 7) | 100 | 100 |
| Corax^{®} N 550/30 | | 35 |
| Vulkasil^{®} A1 | | 10 |
| Diplast TM 8-10/ST | | 8 |
| Luvomaxx^{®} CDPA | | 1.1 |
| Vulkanox ZMB2/C5 | | 0.4 |
| TAIC-70 | | 2 |
| Perkadox^{®} 14-40 | 14 | 14 |

**Table 5: Viscosity of the vulcanizable compositions as a Function of Shear Rate & Temperature for Examples 8 and 9**

| **Compound Viscosity** | | | |
|---|---|---|---|
| **Temperature (°C)** | **Shear Rate (1/s)** | **Ex 8 (Pa·s)** | **Ex. 9 (Pa·s)** |
| 50 | 1 | 1860 | 7150 |
| 75 | 1 | 370 | 2200 |
| 100 | 1 | 129 | 937 |
| 50 | 10 | 1620 | 4300 |
| 75 | 10 | 336 | 1360 |
| 100 | 10 | 109 | 440 |

**Table 6: Cure Characteristics of Examples 8 and 9**

| **MDR 180 °C** | **Ex. 8** | **Ex. 9** |
|---|---|---|
| S' min [dNm] | 0.02 | 0.03 |
| S' max [dNm] | 5.23 | 10.23 |
| S' end [dNm] | 5.09 | 9.99 |
| Delta S' [dNm] | 5.21 | 10.20 |
| TS 2 [s] | 142 | 125 |
| t50 [s] | 165 | 193 |
| t90 [s] | 317 | 383 |
| t95 [s] | 382 | 464 |

**Table 7: Tensile Properties of Cured Articles from Examples 8 and 9**

| **Tensile test & hardness (RT)** | **Ex. 8** | **Ex. 9** |
|---|---|---|
| M10 [MPa] | 0.1 | 0.3 |
| M25 [MPa] | 0.2 | 0.6 |
| M50 [MPa] | 0.3 | 1 |
| M100 [MPa] | 0.4 | 2.7 |
| M300 [MPa] | 1 | -- |
| EB [%] | 376 | 192 |
| TS [MPa] | 2.1 | 6.8 |
| H [ShA] | 22 | 51 |

Examples 8 and 9 demonstrate that it is possible to cure the low viscosity HNBR material using a cure system similar to conventional HNBR rubber grades.

Example 8, specifically demonstrates that the peroxide causes chemical crosslinks between HNBR polymer chains due to the increase in the S' value in the MDR.

Example 9 contains both carbon black and silica as the filler system as well as a peroxide and coagent as the cure system. This Example demonstrates the ability to mix the HNBR rubber with fillers and to cure the resulting vulcanizable polymer composition (again owing to the increase in the S' value in the MDR). Furthermore, the tensile properties show the reinforcing effect of the filler (modulus increase of filled system compared to the unfilled system). Furthermore, these two examples demonstrate the ability to use an open mill to mix the compounds (conventional mixing techniques). The viscosity range demonstrates that these compounds are quite useful in a variety of injection moulding techniques.

### Examples 10 - 13:

The components of the vulcanizable polymer compositions given in parts per hundred rubber (phr) (see Table 8) were mixed in a closed press mixer using conventional techniques. The polymer compositions were then vulcanized at 180°C for a period of 20 minutes. The properties of the polymer composites according to Table 8 are summarized in Tables 9, 10 and 11.

**Table 8: Vulcanizable compositions of Examples 10 - 13**

| **Ingedients:** | **Ex. 10 (phr)** | **Ex. 11 (phr)** | **Ex. 12 (phr)** | **Ex. 13 (phr)** |
|---|---|---|---|---|
| HNBR (Ex. 7) | 100 | 100 | 100 | 100 |
| Luvomaxx^{®} N 990 | | 90 | | |
| Corax^{®} N 550/30 | 35 | | | |
| Statex^{®} N 330 | | | 60 | |
| Lipoxol 6000 | | | | 2 |
| Silitin^{®} N 87 | | | | 110 |
| Vulkasil^{®} A1 | 10 | | | |
| Maglite DE | | | | 2 |
| Zinkoxide Aktiv | | | | 2 |
| Diplast TM 8-10/ST | 8 | | | |
| Luvomaxx^{®} CDPA | 1.1 | 1.1 | 1.1 | 1.1 |
| Vulkanox ZMB2/C5 | 0.4 | 0.4 | 0.4 | 04 |
| TAIC-70 | 2 | | | |
| Tronox^{®} R-U-5 | | | | 5 |
| Oppasin^{®} Rubin 4630 | | | | 3 |
| Rhenofit^{®} TRIM/S | | | | 3 |
| Perkadox^{®} 14s | | 7 | 7 | 56 |
| Perkadox^{®} 14-40 | 14 | | | |

**Table 9: Viscosity of the vulcanizable compositions as a Function of Shear Rate & Temperature for Examples 10 to 13**

| **Viscosity of vulcanizable composition** | | | | | |
|---|---|---|---|---|---|
| **Temperature (°C)** | **Shear Rate (1/s)** | **Ex. 10 (Pa·s)** | **Ex. 11 (Pa·s)** | **Ex. 12 (Pa·s)** | **Ex. 13 (Pa·s)** |
| 50 | 1 | -- | 6470 | 36400 | 8540 |
| 100 | 1 | -- | 447 | 9710 | 1400 |
| 50 | 10 | -- | 4760 | -- | 5370 |
| 100 | 10 | -- | 324 | 1720 | 437 |
| 100 | 100 | -- | 201 | 449 | 250 |

**Table 10: Cure Characteristics of Examples 10 -13**

| **MDR 180 °C** | **Ex. 10** | **Ex 11** | **Ex. 12** | **Ex. 13** |
|---|---|---|---|---|
| S' min [dNm] | 0.01 | 0.01 | 0.26 | 0.01 |
| S' max [dNm] | 10.88 | 13.81 | 22.81 | 1439 |
| S' end [dNm] | 10.79 | 13.16 | 21.82 | 14.01 |
| Delta S' [dNm] | 10.87 | 13.80 | 22.55 | 14.38 |
| TS 2 [s] | 122 | 102 | 702 | 91 |
| t50 [s] | 197 | 167 | 162 | 165 |
| t90 [s] | 417 | 310 | 335 | 339 |
| t95 [s] | 518 | 364 | 402 | 411 |

**Table 11: Tensile Properties of Cured Articles from Examples 10 -13**

| **Tensile test & hardness (RT)** | **Ex. 10** | **Ex. 11** | **Ex 12** | **Ex 13** |
|---|---|---|---|---|
| M10 [MPa] | 0.4 | 0.4 | 0.9 | 0.5 |
| M25 [MPa] | 0.7 | 0.8 | 1.6 | 0.8 |
| M50 [MPa] | 1.3 | 1.6 | 3.0 | 1.2 |
| M100 [MPa] | 3.3 | 4.2 | 7.0 | 2.1 |
| M300 [MPa] | -- | -- | -- | 3.8 |
| EB [%] | 214 | 188 | 113 | 320 |
| TS [MPa] | 9.2 | 11.7 | 8.2 | 3.9 |
| H [ShA] | 54 | 52.4 | 71.3 | 56 |

The compositions of **Examples 10 to 13** were prepared by using a press mixer (type of internal mixer)and show the difference between the mill mix and the press mixer used in Examples 35 and 36 (Ex. 10 vs. Ex 9 and Ex 11 and 12 vs Ex. 35 and 36). In general some differences do exist which may be due to the type of mixer. The four compositions show the use of a pure mineral filler system (Silitin^{®} mineral filler), two different black fillers (highly reinforcing and low reinforcing) and a mixture of a mineral filler and a black filler (medium reinforcing black with silica) and vary by either using a coagent or not, and by different levels and forms of peroxide.

### Examples 14 - 18:

The components of the vulcanizable polymer compositions given in parts per hundred rubber (phr) (see Table 12) were mixed using an open mill. The polymer compositions were then vulcanized at 180°C for a period of 15 minutes. The properties of the vulcanizable compositions according to Table 12 are summarized in Tables 13 14 and 15.

**Table 12: Vulcanizable compositions of Examples 14 -18**

| **Ingredients:** | **Ex 14 (phr)** | **Ex. 15 (phr)** | **Ex. 16 (phr)** | **Ex. 17 (phr)** | **Ex. 18 (phr)** |
|---|---|---|---|---|---|
| HNBR (Ex. 7) | 100 | 100 | 100 | 100 | 100 |
| Luvomaxx^{®} N 660 | | | | | 30 |
| Silitin^{®} Z 86 | | | | 110 | |
| Mistron Vapor RP6 | | | | | 30 |
| Vulkasil^{®} N | | | 50 | | |
| Coupsil^{®} VP 6508 | 25 | 50 | | | |
| Celite^{®} 281 SS | 90 | | | | |
| Maglite DE | 2 | 2 | 2 | 2 | 2 |
| Zinkoxide Aktiv | 2 | 2 | 2 | 2 | 2 |
| Polyglykol 4000 S | 2 | | 2 | 2 | |
| Diplast TM 8-10/ST | 5 | | | | |
| Vulkanox ZMB2/C5 | 0.4 | 0.4 | 0.4 | 0.4 | 0.4 |
| Rhenofit^{®} DDA-70 | 1 | | | | |
| Luvomaxx^{®} CDPA | | 1,1 | 1,1 | 1,1 | 1,1 |
| Tronox^{®} R-U-5 | 5 | | | | |
| Oppasin^{®} Rubin 4630 | 3 | | | | |
| Rhenofit^{®} TRIM/S | 3 | 3 | 3 | 3 | 3 |
| Perkadox^{®} 14s | 5.6 | 5.6 | 5.6 | 5.6 | 5.6 |

**Table 13: Viscosity of the vulcanizable compositions as a Function of Shear Rate & Temperature for Examples 14 to 18**

| **Viscosity of vulcanizable compositions** | | | | | | |
|---|---|---|---|---|---|---|
| **Temperature (°C)** | **Shear Rate (1/s)** | **Ex. 14 (Pa·s)** | **Ex. 15 (Pa·s)** | **Ex. 16 (Pa·s)** | **Ex. 17 (Pa·s)** | **Ex 18 (Pa·s)** |
| 50 | I | 1800 | 26500 | -- | 9230 | 8830 |
| 100 | 1 | 4890 | 16000 | 35400 | 1940 | 1200 |
| 50 | 10 | 9290 | 6850 | -- | 4990 | 4840 |
| 100 | 10 | 873 | 1740 | 4190 | 540 | 383 |
| 100 | 50 | 391 | 451 | 880 | 296 | 242 |

**Table 14: Cure Characteristics of Examples 14 -18**

| **MDR 180 °C** | **Ex. 14** | **Ex 15** | **Ex. 16** | **Ex. 17** | **Ex. 18** |
|---|---|---|---|---|---|
| S' min [dNm] | 0.34 | 1.36 | 2.79 | 0.10 | 0.02 |
| S' max [dNm] | 22.46 | 41.19 | 42.26 | 14.35 | 9.07 |
| S' end [dNm] | 21.85 | 40.69 | 42.25 | 14.33 | 8.95 |
| Delta S' [dNm] | 22.12 | 39.83 | 39.47 | 14.25 | 9.05 |
| TS 2 [s] | 70 | 67 | 80 | 87 | 90 |
| t50 [s] | 154 | 137 | 181 | 190 | 195 |
| t90 [s] | 335 | 322 | 742 | 447 | 422 |
| t95 [s] | 414 | 412 | 1127 | 584 | 522 |

**Table 15: Tensile Properties of Cured Articles from Examples 14 -18**

| **Tensile test & hardness (RT)** | **Ex. 14** | **Ex 15** | **Ex 16** | **Ex. 17** | **Ex. 18** |
|---|---|---|---|---|---|
| M10 [MPa] | 1 | 1 3 | 0.8 | 0.5 | 0.5 |
| M25 [MPa] | 1.7 | 2 | 1 | 0.8 | 0.9 |
| M50 [MPa] | 2.8 | 29 | 1 2 | 1 3 | 1.5 |
| M100 [MPa] | 4.7 | 5.1 | 1.8 | 2.2 | 2.7 |
| M300 [MPa] | -- | -- | 6.2 | 4.2 | 8.5 |
| EB [%] | 122 | 212 | 428 | 445 | 301 |
| TS [MPa] | 5.1 | 12.2 | 10.3 | 6.6 | 8.4 |
| H [ShA] | 72 | 78 | 65 | 57 | 55 |

**Examples 14-18** demonstrate the use of a low viscosity hydrogenated nitrile rubber with some conventional mineral fillers of vastly different types ranging from high activity to low activity fillers (eg silica, modified silica, celite, talc). Different dispersing aids known to those with skill in the art were used as outlined in Table 12. Sample 14 is a red compound which demonstrates the utility of the hydrogenated nitrile rubber in coloured compounds as well Example 14 demonstrates the use of different antiaging systems Shear dependent viscosity measurements show the compositions to be useful in injection moulding techniques.

### Examples 19 - 25:

The components of the vulcanizable polymer compositions given in parts per hundred rubber (phr) (see Table 16) were mixed using an open mill. The polymer compositions were then vulcanized at 180°C for a period of 15 minutes The properties of the polymer composites according to Table 16 are summarized in Tables 17, 18 and 19

**Table 16: Vulcanizable compositions of Examples 19 - 25**

| **Ingredients:** | **Ex. 19 (phr)** | **Ex. 20 (phr)** | **Ex. 21 (phr)** | **Ex. 22 (phr)** | **Ex. 23 (phr)** | **Ex. 24 (phr)** | **Ex. 25 (phr)** |
|---|---|---|---|---|---|---|---|
| HNBR (Ex. 7) | 100 | 100 | 100 | 100 | 100 | 100 | 100 |
| Corax^{®} N 660 | 70 | 70 | 70 | 70 | 70 | 70 | 70 |
| CaO | 3 | 3 | 3 | 3 | 3 | 3 | 3 |
| Luvomaxx^{®} CDPA | 1.1 | 1.1 | 1.1 | 1.1 | 1.1 | 1.1 | 1.1 |
| Vulkanox ZMD2/C5 | 0.4 | 0.4 | 0.4 | 0.4 | 0.4 | 0.4 | 0.4 |
| Sartomer^{®} SR 633 | | | 5 | 10 | | | |
| Photomer^{®} 4006 | | | | | 2 | | |
| Ricon 154 D | | | | | | 4 | |
| TAIC-70 | 2 | 4 | | | | | |
| Rhenofit^{®} TRIM/S | | | | | | | 1.5 |
| Perkadox^{®} 14s | 5.6 | 5.6 | 5 6 | 5.6 | 5.6 | 5 6 | 5.6 |

**Table 17: Viscosity of the vulcanizable compositions as a Function of Shear Rate & Temperature for Example 19-25**

| **Viscosity of the vulcanizable compositions** | | | | | | | | |
|---|---|---|---|---|---|---|---|---|
| **Temperature (°C)** | **Shear Rate (1/s)** | **Ex. 19 (Pa·s)** | **Ex. 20 (Pa·s)** | **Ex. 21 (Pa·s)** | **Ex. 22 (Pa·s)** | **Ex. 23 (Pa·s)** | **Ex. 24 (Pa·s)** | **Ex. 25 (Pa·s)** |
| 50 | 1 | 17200 | 21000 | 23900 | 27500 | 19300 | 20500 | 18600 |
| 100 | 1 | 3830 | 4250 | 4390 | 5010 | 4500 | 4720 | 4200 |
| 100 | 10 | 916 | 972 | 973 | 1080 | 1040 | 1060 | 976 |
| 100 | 50 | 436 | 528 | 530 | 640 | 592 | 527 | 504 |

**Table 18: Cure Characteristics of Examples 19 - 25**

| **MDR 180 °C** | **Ex. 19** | **Ex. 20** | **Ex. 21** | **Ex. 22** | **Ex. 23** | **Ex. 24** | **Ex. 25** |
|---|---|---|---|---|---|---|---|
| S' min [dNm] | 0.05 | 0.05 | 0.06 | 0.08 | 0.04 | 0.07 | 003 |
| S' max [dNm] | 13.93 | 18.06 | 13.84 | 16.88 | 13.98 | 16.85 | 10.58 |
| S' end [dNm] | 13.81 | 18.06 | 12.87 | 1626 | 13.78 | 16.53 | 10.38 |
| Delta S' [dNm] | 13.88 | 18.01 | 13.78 | 16.8 | 13.94 | 16.78 | 10.55 |
| TS 2 [s] | 106 | 97 | 87 | 67 | 83 | 85 | 106 |
| t50 [s] | 194 | 200 | 167 | 162 | 174 | 187 | 182 |
| t90 [s] | 407 | 433 | 327 | 338 | 370 | 386 | 380 |
| t95 [s] | 496 | 544 | 383 | 403 | 447 | 466 | 462 |

**Table 19: Tensile Properties and Hardness of Cured Articles from Examples 19 - 25**

| **Tensile test & hardness (RT)** | **Ex. 19** | **Ex. 20** | **Ex. 21** | **Ex. 22** | **Ex. 23** | **Ex. 24** | **Ex. 25** |
|---|---|---|---|---|---|---|---|
| M10 [MPa] | 0.5 | 0.6 | 0.6 | 0.7 | 0.6 | 0.7 | 0.4 |
| M25 [MPa] | 0.9 | 1.3 | 1 | 1.2 | 1.1 | 1.3 | 0.8 |
| M50 [MPa] | 1.9 | 2.8 | 1.8 | 2.1 | 2 | 2 | 1.4 |
| M100 [MPa] | 5.4 | 8 | 4 | 4.7 | 4.8 | 4.1 | 3.3 |
| M300 [MPa] | -- | -- | -- | -- | -- | -- | -- |
| EB [%] | 144 | 117 | 216 | 199 | 182 | 212 | 211 |
| TS [MPa] | 9.7 | 10.1 | 10.3 | 9.8 | 11 | 10.3 | 10 |
| H [ShA] | 63 | 70 | 64 | 68 | 65 | 69 | 58 |

**Examples 19-25** show the use of various coagents with the same filler and peroxide system to demonstrate the wide degree of properties obtainable through the use of coagents. Some examples show clearly that the cure state (as indicated by S'end) will increase with increasing coagent. Different coagents used here include metal salts, multifunctional acrylates, and functional oligomers. These coagents are a representative selection from those known to a person skilled in the art to improve adhesion, cure state, tear resistance, hardness, as well as other processing and final vulcanizate properties Shear dependent viscosity measurements will show the compounds to be useful in injection moulding techniques.

### Examples 26 - 31:

The components of the vulcanizable polymer compositions given in parts per hundred rubber (phr) (see Table 20) were mixed using an open mill The polymer compositions were then vulcanized at 180°C for a period of 15 minutes. The properties of the polymer composites according to Table 20 are summarized in Tables 21 and 22.

**Table 20: Vulcanizable compositions of Examples 26 - 31**

| **Ingredients:** | **Ex. 26 (phr)** | **Ex 27 (phr)** | **Ex 28 (phr)** | **Ex. 29 (phr)** | **Ex. 30 (phr)** | **Ex. 31 (phr)** |
|---|---|---|---|---|---|---|
| HNBR (Ex. 7) | 100 | 100 | 100 | 100 | 100 | 100 |
| Luvomax N 550/30 | 50 | 50 | 50 | 50 | 50 | 50 |
| CaO | 3 | 3 | 3 | 3 | 3 | 3 |
| Luvomaxx CDPA | 1.1 | 1.1 | 1.1 | 1.1 | 1.1 | 1.1 |
| Vulkanox ZMB2/C5 | 0.4 | 0.4 | 0.4 | 0.4 | 0.4 | 0.4 |
| Perkadox^{®} 14s | 5 | 7 | 9 | | | |
| Perkadox^{®} BC-FF | | | | 8 | 11.2 | 14.4 |

**Table 21: Cure Characteristics of Examples 26 - 31**

| **MDR 180 °C** | **Ex. 26** | **Ex 27** | **Ex. 28** | **Ex 29** | **Ex. 30** | **Ex. 31** |
|---|---|---|---|---|---|---|
| S min [dNm] | 0.01 | 0.02 | 0.02 | 0.01 | 0.01 | 0.01 |
| S' max [dNm] | 6.55 | 15.86 | 25.34 | 5.94 | 14.84 | 24.01 |
| S' end [dNm] | 6.31 | 15.22 | 24.48 | 5.92 | 14.83 | 24 |
| Delta S' [dNm] | 6.54 | 15.84 | 25.32 | 5.93 | 14.83 | 24 |
| TS 2 [s] | 152 | 92 | 70 | 554 | 334 | 237 |
| t50 [s] | 197 | 169 | 146 | 690 | 611 | 507 |
| t90 [s] | 369 | 319 | 275 | 1322 | 1246 | 1075 |
| t95 [s] | 428 | 371 | 317 | 1582 | 1547 | 1398 |

**Table 22: Tensile Properties of Cured Articles from Examples 26 - 31**

| **Tensile test & hardness (RT)** | **Ex. 26** | **Ex. 27** | **Ex 28** | **Ex 29** | **Ex. 30** | **Ex 31** |
|---|---|---|---|---|---|---|
| M10 [MPa] | 0.4 | 0.5 | 0.5 | 0.3 | 0.4 | 0.6 |
| M25 [MPa] | 0.6 | 0.9 | 1.3 | 0.6 | 0.9 | 1.4 |
| M50 [MPa] | 1 | 1.9 | 3.1 | 1 | 1.8 | 3.4 |
| M100 [MPa] | 1.9 | 5.2 | 10.2 | 1.9 | 5.3 | 10.1 |
| M300 [MPa] | 8.2 | -- | -- | 7.8 | -- | -- |
| EB [%] | 292 | 178 | 105 | 306 | 154 | 99 |
| TS [MPa] | 8 | 12.4 | 11.2 | 7.8 | 11 | 10.2 |
| H [ShA] | 53 | 66 | 73 | 52 | 63 | 72 |

**Examples 26-31** show polymer compositions with different peroxides (bifunctional vs monofunctional) and their effect on the cure state of the hydrogenated nitrile rubber The peroxides are mixed in the pure form without carriers present. The materials show an increase in cure state, and reduced elongation at break which is indicative of increased crosslink density. These Examples show that the material is behaving as expected with the peroxide cure system.

### Examples 32 - 36:

The components of the vulcanizable polymer compositions given in parts per hundred rubber (phr) (see Table 23) were mixed using an open mill. The polymer compositions were then vulcanized at 180°C for a period of 15 minutes. The properties of the polymer composites according to Table 23 are summarized in Tables 24 and 25.

**Table 23: Vulcanizable compositions of Examples 32 - 37**

| **Ingredients**: | **Ex. 32 (phr)** | **Ex. 33 (phr)** | **Ex. 34 (phr)** | **Ex. 35 (phr)** | **Ex. 36 (phr)** |
|---|---|---|---|---|---|
| HNBR of Ex. 7 | 100 | 100 | 100 | 100 | 100 |
| Statex^{®} N 330 | 50 | | | | 60 |
| Corax^{®} N 550/30 | | | 35 | | |
| Corax^{®} N 660 | | 70 | | | |
| Luvomaxx^{®} N 990 | | | | 90 | |
| Vulkasil^{®} A1 | | | 10 | | |
| Diplast TM 8- 10/ST | | | 8 | | |
| CaO | 3 | 3 | | 3 | 3 |
| Luvomaxx^{®} CDPA | 1.1 | 1.1 | 1.1 | 1.1 | 1.1 |
| Vulkanox ZMB2/C5 | 0.4 | 0.4 | 0.4 | 0.4 | 0.4 |
| TAIC 70 | 2 | 2 | 2 | | |
| Perkadox^{®} 14s | 5.6 | | | 7 | 7 |
| Perkadox^{®} 14-40 | | | 14 | | |
| Perkadox^{®} BC-FF | | 9 | | | |

**Table 24: Cure Characteristics of Examples 32 - 36**

| **MDR 180 °C** | **Ex. 32** | **Ex. 33** | **Ex. 34** | **Ex. 35** | **Ex. 36** |
|---|---|---|---|---|---|
| S' min [dNm] | 0.04 | 0.02 | 0.01 | 0.02 | 0.12 |
| S' max [dNm] | 10.77 | 15.36 | 7.56 | 16.92 | 7.93 |
| S' end [dNm] | 10.69 | 14.37 | 7.5 | 16.86 | 7.87 |
| Delta S' [dNm] | 10.73 | 15.34 | 7.55 | 16.9 | 7.81 |
| TS 2 [s] | 127 | 59 | 149 | 99 | 106 |
| t50 [s] | 212 | 104 | 211 | 180 | 186 |
| t90 [s] | 456 | 196 | 460 | 388 | 439 |
| t95 [s] | 568 | 227 | 582 | 488 | 556 |

**Table 25: Tensile Properties and Hardness of Cured Articles from Examples 32 - 36**

| **Tensile test & hardness (RT)** | **Ex. 32** | **Ex. 33** | **Ex. 34** | **Ex. 35** | **Ex. 36** |
|---|---|---|---|---|---|
| M10 [MPa] | 0.4 | 0.5 | 0.3 | 0.5 | 0.5 |
| M25 [MPa] | 0.8 | 1 | 0.5 | 1 | 1.1 |
| M50 [MPa] | 1.4 | 2 | 0.7 | 2 | 2.1 |
| M100 [MPa] | 3.7 | 5.9 | 1.7 | 5.1 | 6.2 |
| M300 [MPa] | -- | -- | -- | -- | -- |
| EB [%] | 165 | 142 | 236 | 167 | 105 |
| TS [MPa] | 7.8 | 10.2 | 7.1 | 10.3 | 6.7 |
| H [ShA] | 58 | 64 | 45 | 65 | 60 |

Example 32 is for comparison with Example 19 to demonstrate use of a different carbon black in the same formulation. Example 33 is for comparison with Example 19 to demonstrate use of a different peroxide in the same formulation. Examples 34, 35 and 36 are present to show contrast between the mill mixed samples and those performed in the press mixer.

In general with the previous Examples, it should be clear that the specific low viscosity optionally hydrogenated rubber component (i) allows for the preparation of vulcanizable compositions as well as the respective vulcanizates which dispose of the mentioned advantages and simultaneously also show the attractive property profile observed when using vulcanizable compositions/vulcanizates based on optionally hydrogenated nitrile butadiene based elastomers currently commercially available as state of the art. What is intended to be demonstrated in this application is the use of different levels of peroxide, different types of peroxide, different anti aging systems, different black fillers, different white filles, combinations of black and white fillers, different coagents and different colourants possible for such vulcanizates.

### Examples 37 - 60:

Examples 37-60 illustrate the utility of this new class of HNBR in blend compounds. The inventive HNBR according to Example 7 was blended with other non-inventive HNBR polymers the molecular weights and compositional analysis of which is given in Table 26. The definition of the ingredients in the vulcanizable compositions as well as the methods used to characterize the vulcanizable compositions and the cured compounds thereof are explained above in Section B.

**Table 26: Analytical data for HNBR materials used for the Examples 37 - 60**

| | **HNBR A** | **HNBR B** | **HNBR C** | **HNBR D** |
|---|---|---|---|---|
| ACN (mol %) | 34 | 34 | 34 | 34 |
| RDB content (mol %) | < 0,9 | < 0,9 | < 0,9 | < 0,9 |
| Mooney Viscosity (ML 1+4 at 100°C) | 128 | 60 | 72 | 40 |
| Mₙ (kg/mol) | 101 | 81 | 106 | 84 |
| M_{w} (kg/mol) | 341 | 267 | 336 | 210 |
| PDI | 3,40 | 3,29 | 3,2 | 2,5 |

**HNBR A, B, C** and **D** were synthesized according to well known techniques e.g. according to methods as disclosed in US-A-6,673,881 by polymerising acrylonitrile and butadiene in emulsion, optionally subjecting the nitrile butadiene copolymer obtained to a metathesis reaction in particular using Grubbs II catalyst and subsequently hydrogenating the nitrile rubber e.g. in monochlorobenzene in particular using Wilkinson's catalyst to obtain the respective hydrogenated nitrile rubber.

### Examples 37 to 44:

The components of the vulcanizable polymer compositions given in parts per hundred rubber (phr) (see Table 27) were mixed using an open mill The vulcanizable polymer compositions were then vulcanized at 180°C for a period of 15 minutes. The properties of the polymer composites according to Table 27 are summarized in Tables 28, 29 30 and 31.

**Table 27: Vulcanizable compositions of Examples 37 - 44**

| **Ingredients** | **Ex.37 (phr)** | **Ex.38 (phr)** | **Ex.39 (phr)** | **Ex.40 (phr)** | **Ex.41 (phr)** | **Ex.42 (phr)** | **Ex.43 (phr)** | **Ex.44 (phr)** |
|---|---|---|---|---|---|---|---|---|
| | | Non inventive | Non-inventive | | | Non-inventive | Non-inventive | |
| HNBR of Ex. 7 | 20 | | | 100 | 20 | | | 100 |
| HNBR A | 80 | | 100 | | 80 | | 100 | |
| HNBR B | | 100 | | | | 100 | | |
| | | | | | | | | |
| Luvomaxx^{®} N 990 | 90 | 90 | 90 | 90 | | | | |
| Statex^{®}N 330 | | | | | 60 | 60 | 60 | 60 |
| Luvomaxx CDPA | 1,1 | 1,1 | 1,1 | 1,1 | 1,1 | 1,1 | 1,1 | 1,1 |
| Vulkanox ZMB2/C5 | 0,4 | 0,4 | 0,4 | 0,4 | 0,4 | 0,4 | 0,4 | 0,4 |
| Perkadox^{®} 14s | 4,2 | 3 | 2,7 | 7 | 4,2 | 3 | 2,7 | 7 |

**Table 28: Mooney viscosity (ML 1+4 at 100°C) of the HNBR(s) (also "raw polymers") and the vulcanizable compositions of Table 27 at 100°C for Examples 37-44**

| **ML 1+4 at 100°C** | **Ex. 37** | **Ex. 38** | **Ex. 39** | **Ex. 40** | **Ex. 41** | **Ex. 42** | **Ex. 43** | **Ex. 44** |
|---|---|---|---|---|---|---|---|---|
| | | Non-mventive | Non-inventive | | | Non-inventive | Non-inventive | |
| HNBR or HNBR blend | 58 | 60 | 128 | 0 | 58 | 60 | 128 | 0 |
| Vulcanizable composition | 99 | 107 | 135 | 0 | 119 | 127 | >200 | 4 |

**Table 29. Cure Characteristics of Examples 37 - 44 (MDR 180 °C)**

| | **Ex. 37** | **Ex. 38** | **Ex. 39** | **Ex.40** | **Ex. 41** | **Ex. 42** | **Ex. 43** | **Ex. 44** |
|---|---|---|---|---|---|---|---|---|
| S' mm [dNm] | 2,26 | 1,94 | 2,21 | 0,01 | 2,91 | 2,75 | 3,72 | 0,17 |
| S' max [dNm] | 30,53 | 31,79 | 29.85 | 15,98 | 31.51 | 31.4 | 30.29 | 15.45 |
| S' end [dNm] | 29,38 | 31,4 | 28,81 | 15,47 | 29,95 | 30,46 | 29,14 | 14,61 |
| Delta S' [dNm] | 28,27 | 29,85 | 27,64 | 15,97 | 28,6 | 28,65 | 26,57 | 15,28 |
| TS 2 [s] | 26 | 28 | 29 | 102 | 25 | 27 | 29 | 83 |
| t50 [s] | 84 | 97 | 82 | 180 | 82 | 91 | 83 | 168 |
| t90 [s] | 234 | 297 | 231 | 343 | 229 | 258 | 236 | 337 |
| t95 [s] | 295 | 392 | 294 | 408 | 287 | 326 | 298 | 401 |

**Table 30: Tensile and Compression Set Properties of cured articles obtained from vulcanizable compositions of Examples 37 - 44**

| | **Ex. 37** | **Ex. 38** | **Ex. 39** | **Ex. 40** | **Ex. 41** | **Ex. 42** | **Ex. 43** | **Ex. 44** |
|---|---|---|---|---|---|---|---|---|
| **Tensile test & hardness (RT)** | | | | | | | | |
| M10 [MPa] | 0,7 | 0,7 | 0,8 | 0,4 | 1 | 1 | 1,1 | 0,6 |
| M25 [MPa] | 1,3 | 1,4 | 1,4 | 0,7 | 1,7 | 1,7 | 1,7 | 1,1 |
| M50 [MPa] | 2,3 | 2,4 | 2,3 | 1,5 | 2,9 | 2,8 | 2,5 | 1,9 |
| M100 [MPa] | 6,3 | 6 | 5,8 | 3,8 | 8,9 | 7,4 | 6 | 4,5 |
| EB [%] | 242 | 276 | 296 | 141 | 152 | 182 | 272 | 164 |
| TS [MPa] | 16,7 | 16,5 | 17,2 | 5,3 | 19,4 | 22,4 | 32 | 10 |
| H [ShA] | 69 | 71 | 71 | 54 | 74 | 76 | 75 | 67 |

| **Compression Set (150 °C)** | | | | | | | | |
|---|---|---|---|---|---|---|---|---|
| 72 hours [%] | 31 | 28 | 40 | 37 | 38 | 36 | 50 | 46 |
| 168 hours [%] | 37 | 36 | 47 | 40 | 47 | 44 | 57 | 54 |
| 336 hours [%] | 44 | 42 | 54 | 50 | 57 | 55 | 65 | 65 |

**Table 31: Heat Build Up of cured articles obtained from vulcanizable compositions of Examples 37 - 44**

| **Heat Build Up** | **Ex. 37** | **Ex. 38** | **Ex. 39** | **Ex. 40** | **Ex. 41** | **Ex. 42** | **Ex. 43** | **Ex. 44** |
|---|---|---|---|---|---|---|---|---|
| Flowing (%) | -0,8 | -0,7 | 0,3 | * | -0,4 | -0,3 | 2,3 | * |
| Permanent Set (%) | 0,4 | 0,4 | 0,8 | -- | 0,8 | 0,8 | 2,4 | -- |
| Internal Temperature (°C) | 164 | 171 | 172 | -- | 184 | 195 | 200 | -- |
| Heat Build Up (°C) | 33 | 39 | 43 | -- | 41 | 48 | 49 | -- |

| | | | | | | | | |
|---|---|---|---|---|---|---|---|---|
| * cured samples were too soft to test. | | | | | | | | |

Examples 37-44 show the utility of using a specific inventive low viscosity HNBR (Example 7) m blend compounds Specifically, examples 37 and 41 are compounds based on a blend of a high molecular weight HNBR (80 phr, HNBR A) and the low molecular weight HNBR (20 phr, Example 7) which blend has a similar raw polymer Mooney Viscosity as the HNBR B used in Examples 38 and 42 for comparison The viscosity of the inventive vulcanizable compositions of Examples 37 and 41 are significantly lower than the analogous HNBR B based compounds (Examples 38 and 42), which offers advantages in processing the uncured vulcanizable compositions. Equivalent final cure states could be reached for all compounds except Example 40 and Example 44 (see Table 29) Tensile and compression set properties are listed in Table 30

The values for the heat build of the cured compositions obtained from the vulcanizable compositions of Examples 40 and 44 were not possible to obtain due to the cured compounds deforming during the test, leading to errors in the measurement (too soft to test). It can be seen that the two inventive blend compounds (Example 37 and Example 41) show significantly less heat build up than the comparative examples (Example 38 and Example 42) which have a similar Mooney Viscosity. Furthermore, the non inventive Examples merely using the higher Mooney HNBR A (Example 39 and Example 43) do not show a reduced heat build up.

### Examples 45 - 55:

The components of the vulcanizable polymer compositions given in parts per hundred rubber (phr) (see Table 32) were mixed using a 1,5 L internal mixer with a fill factor of 74%, a rotor speed of 60 rpm and a initial temperature of 60 °C using standard lab practices The polymer compositions were then vulcanized at 180°C for a period of 15 minutes. The cure characteristics are given in Table 34, the properties of the cured compounds obtained thereby in Tables 35 and 36.

**Table 32: Vulcanizable compositions of Examples 45 - 55**

| **Ingredients:** | **Ex. 45 (phr)** | **Ex. 46 (phr)** | **Ex. 47 (phr)** | **Ex. 48 (phr)** | **Ex. 49 (phr)** | **Ex. 50 (phr)** | **Ex. 51 (phr)** | **Ex. 54 (phr)** | **Ex. 52 (phr)** | **Ex. 55 (phr)** | **Ex. 53 (phr)** |
|---|---|---|---|---|---|---|---|---|---|---|---|
| | Non-inven -tive | Non-inven tive | | | | Non-invent -ive | | | | | |
| HNBR of Ex.7 | | | 10 | 30 | 50 | | 10 | 20 | 30 | 30 | 50 |
| HNBR C | 100 | | 90 | 70 | 50 | | 90 | 80 | 70 | 70 | 50 |
| HNBR D | | 100 | | | | 100 | | | | | |
| | | | | | | | | | | | |
| Corax^{®} N 550/30 | 35 | 35 | 35 | 35 | 35 | 35 | 35 | 35 | 35 | 35 | 35 |
| Vulkasil^{®} A1 | 10 | 10 | 10 | 10 | 10 | 10 | 10 | 10 | 10 | 10 | 10 |
| Diplast^{®} TM 8-10/ST | 8 | 8 | 8 | 8 | 8 | 8 | 8 | 8 | 8 | 8 | 8 |
| Luvomaxx^{®} CDPA | 1,1 | 1,1 | 1,1 | 1,1 | 1,1 | 1,1 | 1,1 | 1,1 | 1,1 | 1,1 | 1,1 |
| Vulkanox^{®} ZMB2/C5 | 04 | 0,4 | 0,4 | 0,4 | 0,4 | 0,4 | 0,4 | 0,4 | 0,4 | 0,4 | 0,4 |
| TAIC 70 | 2 | 2 | 2 | 2 | 2 | 2 | 2 | 2 | 2 | 2 | 2 |
| Perkadox^{®} 14-40 | 7 | 7 | 7 | 7 | 7 | 8,6 | 7,7 | 8,8 | 9,1 | 9,7 | 10,5 |

**Table 33. Mooney viscosity (ML 1+4 at 100°C) of the vulcanizable compositions of Examples 45-55**

| | **Ex. 45** | **Ex. 46** | **Ex. 47** | **Ex. 48** | **Ex. 49** | **Ex. 50** | **Ex. 51** | **Ex. 54** | **Ex. 52** | **Ex 55** | **Ex. 53** |
|---|---|---|---|---|---|---|---|---|---|---|---|
| ML 1+4 at 100°C | 76,9 | 47,5 | 61,3 | 37 | 19,5 | 46,1 | 61,7 | 45,9 | 359 | 34,1 | 176 |

**Table 34: Cure Characteristics of Examples 45 - 55 (MDR 180 °C)**

| | **Ex. 45** | **Ex. 46** | **Ex. 47** | **Ex. 48** | **Ex. 49** | **Ex. 50** | **Ex. 51** | **Ex. 54** | **Ex. 52** | **Ex. 55** | **Ex. 53** |
|---|---|---|---|---|---|---|---|---|---|---|---|
| S' min [dNm] | 1,41 | 0,6 | 1,05 | 0,54 | 0,21 | 0,59 | 1,07 | 0,7 | 0,53 | 0,5 | 0,19 |
| S' max [dNm] | 20 | 17,1 | 17,1 | 11,4 | 7,11 | 21,3 | 19 | 19,2 | 16,4 | 18,1 | 13,1 |
| S' end [dNm] | 19,9 | 17 | 17 | 11,3 | 7,06 | 21 | 18,8 | 19,0 | 16,2 | 17,9 | 12,9 |
| Delta S' [dNm] | 18,6 | 16,5 | 16,1 | 10,8 | 6,9 | 20,7 | 18 | 18,5 | 15,9 | 17,7 | 12,9 |
| TS 2 [s] | 42,6 | 53,4 | 48 | 69,6 | 116 | 46,2 | 44,4 | 46 | 54,6 | 49 | 75,6 |
| t50 [s] | 119 | 137 | 127 | 148 | 176 | 127 | 124 | 122 | 139 | 127 | 159 |
| t90 [s] | 337 | 357 | 341 | 380 | 427 | 329 | 332 | 318 | 351 | 317 | 376 |
| t95 [s] | 439 | 455 | 433 | 482 | 528 | 414 | 421 | 404 | 442 | 398 | 467 |

**Table 35: Tensile and Compression Set Properties of cured articles obtained from vulcanizable compositions of Examples 45 - 55**

| | **Ex. 45** | **Ex. 46** | **Ex. 47** | **Ex. 48** | **Ex. 49** | **Ex. 50** | **Ex. 51** | **Ex. 54** | **Ex. 52** | **Ex. 55** | **Ex. 53** |
|---|---|---|---|---|---|---|---|---|---|---|---|
| **Tensile test & hardness (RT)** | | | | | | | | | | | |
| M10 [MPa] | 0,5 | 0,5 | 0,5 | 0,4 | 0,4 | 0,6 | 0,5 | 0,5 | 0,5 | 0,5 | 0,4 |
| M25 [MPa] | 0,9 | 0,9 | 0,9 | 0,7 | 0,6 | 1 | 0,9 | 0,9 | 0,8 | 0,9 | 0,7 |
| M50 [MPa] | 1,3 | 1,3 | 1,3 | 1 | 0,8 | 1,5 | 1,4 | 1,5 | 1,2 | 1,4 | 1,1 |
| M100 [MPa] | 2,8 | 2,7 | 2,7 | 2 | 1,6 | 3,5 | 3,2 | 3,7 | 2,8 | 3,8 | 2,8 |
| M300 [MPa] | 18,8 | 17,2 | 17,3 | 12,8 | 8,6 | -- | 19,7 | -- | 18,2 | -- | 16,2 |
| EB [%] | 358 | 360 | 387 | 444 | 499 | 285 | 335 | 286 | 334 | 279 | 305 |
| TS [MPa] | 23,2 | 21,2 | 23,6 | 20 | 15,6 | 20,3 | 22,5 | 19,8 | 20,6 | 19,2 | 16,5 |
| H [ShA] | 60,3 | 58,6 | 58,2 | 52,3 | 47,1 | 61,7 | 59,3 | 60 | 56,5 | 60 | 53,6 |

| **Compression Set (150 °C)** | | | | | | | | | | | |
|---|---|---|---|---|---|---|---|---|---|---|---|
| 24hours [%] | 24 | 23,9 | 22,9 | 26,8 | 32,2 | 19,8 | 21,8 | 22,5 | 22,1 | 21,7 | 21,9 |
| 70hours [%] | 33,1 | 33,3 | 31,7 | 38,5 | 43,3 | 28,6 | 30,7 | 29,1 | 30,3 | 29,7 | 31 |

These vulcanizable polymer compositions are only demonstrative formulations which can be used for seals or timing belts or any other applications for which improved flow properties are an advantage. Furthermore, the use of such a low viscosity polymer in such a vulcanizable blend composition negates the use of various low molecular weight processing aids commonly used in the rubber industry to achieve improved flow properties.

**Table 36: Results from Injection Moulding Trials using a Rheovulcameter with a Ramification Mould Equiped (Examples 45 - 55)**

| | **Ex. 45** | **Ex. 46** | **Ex. 47** | **Ex. 48** | **Ex. 49** | **Ex. 50** | **Ex. 51** | **Ex. 54** | **Ex. 52** | **Ex. 55** | **Ex. 53** |
|---|---|---|---|---|---|---|---|---|---|---|---|
| Fill (%) 50 bar | 0 | 15,5 | 13,7 | 29,8 | 85,3 | 19,4 | 11,7 | 23,4 | 35,1 | 32,7 | 92,5 |
| Fill (%) 97 bar | 34,6 | 71,6 | 52,1 | 123,9 | 269,1 | 65,1 | 52,3 | 77,9 | 122.9 | 126,7 | 240,4 |
| Internal Temp (°C) | 100 | 100 | 100 | 100 | 100 | 100 | 100 | 100 | 100 | 100 | 100 |
| Cure Temp (°C) | 190 | 190 | 190 | 190 | 190 | 190 | 190 | 190 | 190 | 190 | 190 |

Examples 45-55 demonstrate the utility of using a specific low viscosity rubber component (Example 7) for injection moulding applications. Specifically, examples 48, 52 and 55 are compounds based on a blend of a high molecular weight HNBR material (70 phr of HNBR C) and a low molecular weight HNBR material (30 phr, Example 7). The viscosity of the vulcanizable composition of Examples 48, 52 and 55 are significantly lower than the analogous HNBR C or HNBR D based compounds (Examples 45 and 46) This reduced Mooney viscosity can offer significant advantages in processing of the uncured compounds. To demonstrate this effect the vulcanizable compositions were tested using a Rheovulcameter (see Table 36). The vulcanizable compositions made with the addition of the low viscosity rubber component (Example 7) show much improved flow properties, which is observed by the increase in the filling percentage of the mould as the fraction of low viscosity material in the compound is increased.

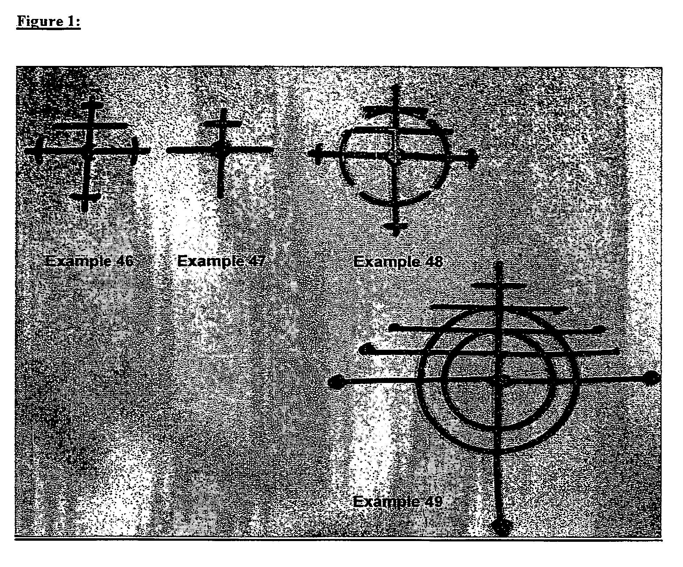

**Figure 1** attached shows a photograph of cured samples from Examples 46-49 illustrating the filling of the ramification mould with a 50 bar filling pressure Example 45 had no cured article formed due to the material not being able to flow into the mould at all with such a relatively low (50 bar) injection pressure

**Table 37: Heat Build Up of Cured Articles (Examples 45 and 51- 55)**

| **Heat Build Up** | **Ex. 45** | **Ex. 51** | **Ex. 54** | **Ex. 52** | **Ex. 55** | **Ex. 53** |
|---|---|---|---|---|---|---|
| Flowing (%) | -0,6 | -1,0 | -0,8 | -1,0 | -1,1 | -1,0 |
| Permanent Set (%) | 0,8 | 1,2 | 0,8 | 1,2 | 1,2 | 1,6 |
| Internal Temperature (°C) | 162 | 152 | 151 | 149 | 145 | 147 |
| Heat Build Up (°C) | 30 | 29 | 24 | 27 | 24 | 26 |

Table 37 summarizes the results for the heat build up properties of cured articles obtained from the vulcanizable compositions of Examples 45, 51-55. The heat build up of cured articles formed with HNBR of Example 7 shows improved values compared to comparative Example 45 One may in particular best compare non-inventive Example 45 and inventive Examples 54 and 55, as they show a matching effective crosslink density (very similar torque values measured by MDR): The heat build up for Examples 54 and 55 shows a 6 °C reduction compared to Example 45

**Table 38: Hot Air and Oil Immersion Aging of Cured Articles from Ex. 45 - 55**

| | **Ex.45** | **Ex.46** | **Ex.47** | **Ex.48** | **Ex.49** | **Ex.50** | **Ex.51** | **Ex.54** | **Ex.52** | **Ex.55** | **Ex.53** |
|---|---|---|---|---|---|---|---|---|---|---|---|
| **Hot Air Aging, 7 days at 150°C, Tensile test & hardness (RT)** | | | | | | | | | | | |
| M10 [MPa] | 0,7 | 0,7 | 0,7 | 0,6 | 0,5 | 0,7 | 0,7 | 0,6 | 0,6 | 0,6 | 0,6 |
| M25 [MPa] | 1,3 | 1,2 | 1,2 | 1 | 0,9 | 1,3 | 1,2 | 1,2 | 1,1 | 1,1 | 1 |
| M50 [MPa] | 2,1 | 2 | 1,9 | 1,6 | 1,4 | 2,4 | 2,1 | 2 | 1,9 | 2 | 1,9 |
| M100 [MPa] | 5,5 | 4,8 | 4,6 | 3,7 | 3,1 | 6,5 | 5,3 | 5,2 | 5 | 5,4 | 4,8 |
| M300 [MPa] | 24,9 | 20,8 | 21,2 | 16,5 | 11,9 | -- | 22,4 | -- | -- | -- | -- |
| EB [%] | 298 | 338 | 329 | 362 | 406 | 265 | 298 | 285 | 286 | 282 | 278 |
| TS [MPa] | 24,9 | 22,7 | 23 | 19,2 | 15,1 | 22,1 | 22,4 | 22 | 20,4 | 21,7 | 17,9 |
| Δ EB [%] | -17 | -6 | -15 | -18 | -19 | -7 | -11 | -13 | -14 | -5 | -9 |
| Δ TS [%] | 7 | 7 | -3 | -4 | -3 | 9 | 0 | -3 | -1 | 6 | 9 |
| H [ShA] | 67 | 67 | 66 | 62 | 58 | 68 | 67 | 67 | 65 | 66 | 64 |
| Δ H [ShA] | 7 | 8 | 8 | 9 | 11 | 7 | 8 | 8 | 9 | 8 | 10 |

| **Hot Air Aging, 21 days at 150°C, Tensile test & hardness (RT)** | | | | | | | | | | | |
|---|---|---|---|---|---|---|---|---|---|---|---|
| M10 [MPa] | 0,8 | 0,7 | 0,7 | 0,6 | 0,6 | 0,8 | 0,7 | 0,7 | 0,7 | 0,7 | 0,7 |
| M25 [MPa] | 1,5 | 1,4 | 1,3 | 1,1 | 1 | 1,6 | 1,3 | 1,3 | 1,3 | 1,4 | 1,3 |
| M50 [MPa] | 3 | 2,5 | 2,3 | 2 | 1,8 | 3,2 | 2,5 | 2,5 | 2,6 | 2,8 | 2,7 |
| M100 [MPa] | 8,6 | 6,6 | 6,3 | 5,1 | 4,1 | 8,8 | 6,9 | 7,2 | 7,3 | 7,6 | 7 |
| M300 [MPa] | -- | -- | -- | -- | -- | -- | -- | -- | -- | -- | -- |
| EB [%] | 207 | 237 | 240 | 262 | 275 | 194 | 217 | 216 | 211 | 204 | 193 |
| TS [MPa] | 23,5 | 21,3 | 21 | 18,5 | 14,5 | 20,7 | 20,5 | 21,3 | 19,7 | 20,6 | 16,7 |
| Δ EB [%] | -42 | -34 | -38 | -41 | -45 | -32 | -35 | -34 | -37 | -32 | -37 |
| Δ TS [%] | 1 | 1 | -11 | -8 | -7 | 2 | -9 | -6 | -4 | 1 | 1 |
| H [ShA] | 71 | 69 | 69 | 65 | 63 | 71 | 68 | 70 | 69 | 71 | 68 |
| Δ H [ShA] | 11 | 10 | 10 | 12 | 15 | 10 | 9 | 12 | 12 | 12 | 15 |

| **Swelling in IRM 901, 7 days at 150°C, Tensile test & hardness & Volume Change (RT)** | | | | | | | | | | | |
|---|---|---|---|---|---|---|---|---|---|---|---|
| M10 [MPa] | 0,6 | 0,5 | 0,5 | 0,5 | 0,4 | 0,6 | 0,5 | 0,6 | 0,5 | 0,6 | 0,5 |
| M25 [MPa] | 1 | 1 | 1 | 0,8 | 0,7 | 1 | 1 | 1,1 | 0,9 | 1,1 | 0,9 |
| M50 [MPa] | 1,6 | 1,5 | 1,5 | 1,2 | 1,1 | 1,6 | 1,6 | 1,8 | 1,4 | 1,8 | 1,4 |
| M100 [MPa] | 3,4 | 3,2 | 3,1 | 2,4 | 2,1 | 3,9 | 3,7 | 4,8 | 3,3 | 4,8 | 3,5 |
| M300 [MPa] | 22 | 19,4 | 20 | 14,7 | 10,3 | 23,2 | 21,6 | 23,6 | 19,7 | -- | 17,8 |
| EB [%] | 380 | 388 | 399 | 450 | 482 | 313 | 353 | 317 | 341 | 277 | 339 |
| TS [MPa] | 28,1 | 25,1 | 26,9 | 22,2 | 17,2 | 24 | 25,6 | 24,7 | 22,1 | 21,8 | 19,9 |
| Δ EB [%] | 6 | 8 | 3 | 1 | -3 | 10 | 5 | 11 | 2 | -1 | 11 |
| Δ TS [%] | 21 | 18 | 14 | 11 | 10 | 18 | 14 | 25 | 7 | 14 | 21 |
| H [ShA] | 64 | 63 | 62 | 58 | 55 | 65 | 64 | 65 | 61 | 64 | 60 |
| Δ H [ShA] | 4 | 4 | 4 | 6 | 8 | 6 | 5 | 4 | 4 | 3 | 6 |
| Δ V [%] | -5 | -5 | -5 | -5 | -6 | -5 | -5 | -6 | -6 | -7 | -6 |

| **Swelling in IRM 903, 7 days at 150°C, Tensile test & hardness & Volume Change (RT)** | | | | | | | | | | | |
|---|---|---|---|---|---|---|---|---|---|---|---|
| M10 [MPa] | 0,4 | 0,4 | 0,4 | 0,3 | 0,3 | 0,4 | 0,4 | 0,4 | 0,3 | 0,4 | 0,3 |
| M25 [MPa] | 0,7 | 0,7 | 0,7 | 0,6 | 0,5 | 0,8 | 0,7 | 0,8 | 0,7 | 0,8 | 0,6 |
| M50 [MPa] | 1,2 | 1,1 | 1,1 | 0,9 | 0,8 | 1,3 | 1,2 | 1,5 | 1,1 | 1,4 | 1,1 |
| M100 [MPa] | 3,1 | 2,8 | 2,8 | 2 | 1,7 | 3,7 | 3,3 | 4,3 | 3,1 | 4,3 | 3,1 |
| M300 [MPa] | 20,3 | 18,2 | 18,5 | 13,7 | 9,6 | 22,3 | 20,5 | 22,1 | 18,9 | -- | -- |
| EB [%] | 332 | 347 | 356 | 414 | 451 | 281 | 322 | 290 | 288 | 279 | 289 |
| TS [MPa] | 22,6 | 21,3 | 22,7 | 19,4 | 14,8 | 20,6 | 21,8 | 21,3 | 18,3 | 20 | 16,2 |
| Δ EB [%] | -7 | -4 | -8 | -7 | -10 | -1 | -4 | 1 | -14 | 0 | -5 |
| Δ TS [%] | -3 | 1 | -4 | -3 | -5 | 2 | -3 | 8 | -11 | 4 | -2 |
| H [ShA] | 54 | 52 | 53 | 47 | 43 | 56 | 54 | 56 | 53 | 56 | 50 |
| Δ H [ShA] | -6 | -7 | -5 | -5 | -4 | -6 | -5 | -4 | -4 | -5 | -4 |
| Δ V [%] | 16 | 15 | 15 | 14 | 12 | 14 | 14 | 11 | 13 | 10 | 11 |

Table 38 summarizes the hot air aging (150 °C) and oil immersion testing (150 °C, IRM 901 and IRM 903). The immersion testing in IRM 901 results in an extraction of low-molecular weight materials from the cured articles, therefore the ΔV values are negative. The immersion testing with IRM 903 demonstrates the swelling of the cured articles, this resulting in a positive ΔV value. Overall Examples 45 to 55 display similar hot air and oil immersion aging properties, so there is no negative effect on the properties of cured articles formed when using HNBR according to Example 7 compared with the cured article obtained from the comparative vulcanizable composition (Example 45) In fact, there is even a slight improvement in case of the swelling test in IRM 903 Examples 51 - 55 display a reduced swelling when immersed in IRM 903. Articles formed with HNBR according to Example 7 show a similar reduction in volume when immersed in IRM 901, while displaying comparable negative ΔV values as the comparative vulcanizable composition (Example 45) This is an important advantage because compositions not containing a low viscosity inventive HNBR would require the incorporation of substantial amounts of plasticizers or other additives to obtain the same tailor-make blends with the specific excellent processability and performance properties Such plasticizers, however will typically result in a substantially increased leach-out when immersing cured articles based on such compositions in IRM 901.

### Example 56-60:

The components of the vulcanizable polymer compositions given in parts per hundred rubber (phr) (see Table 39) were mixed using a 1,5 L internal mixer with a fill factor of 74% a rotor speed of 60 rpm and a initial temperature of 60 °C using standard lab practices. The polymer compositions were then vulcanized at 180°C for a period of 15 minutes. The cure characteristics are given in Table 40, the properties of the cured compounds obtained thereby in Tables 41 and 42.

**Table 39: Vulcanizable compositions of Examples 56 -60 (without DIPLAST^{®} TM 8-10/ST)**

| **Compound Formulations** | **Ex.56** | **Ex.57** | **Ex.58** | **Ex.59** | **Ex.60** |
|---|---|---|---|---|---|
| | non-inventive | non-inventive | | | |
| HNBR of Ex. 7 | | | 10 | 20 | 30 |
| HNBRC | 100 | | 90 | 80 | 70 |
| HNBR D | | 100 | | | |
| Corax^{®} N 550/30 | 35 | 35 | 35 | 35 | 35 |
| Vulkasil^{®} A1 | 10 | 10 | 10 | 10 | 10 |
| Luvomaxx^{®} CDPA | 1,1 | 1,1 | 1,1 | 1,1 | 1,1 |
| Vulkanox^{®} ZMB2/C5 | 0,4 | 0,4 | 0,4 | 0,4 | 0,4 |
| TAIC 70 | 2 | 2 | 2 | 2 | 2 |
| Perkadox^{®} 14-40 B PB | 7 | 8,6 | 7,7 | 8,8 | 9,7 |

These Examples 56-60 serve to further demonstrate the use of the inventive low viscosity HNBR as a covulcanizable viscosity modifier for HNBR based compounds: A study of the flow properties and resulting physical properties of compounds without the addition of a separate low viscosity plasticizer (DIPLAST^{®} TM 8-10/ST) was performed

The MDR data of **Examples 56-60** are listed in **Table 40.**

**Table 40: Cure properties and Compound Mooney Viscosity of Example 56-60 compounds (without addition of DIPLAST^{®} TM 8-10/ST)**

| **Compound** | | **Ex. 56** | **Ex. 57** | **Ex. 58** | **Ex.59** | **Ex. 60** |
|---|---|---|---|---|---|---|
| **MDR Cure Characteristics : 180°C, 30 min** | | | | | | |
| S'min | (dNm) | 1,8 | 1,0 | 1,5 | 1,0 | 0,7 |
| S' max | (dNm) | 26,6 | 28,3 | 25,8 | 24,0 | 23,1 |
| S' end | (dNm) | 26,4 | 27,9 | 25,5 | 23,6 | 22,7 |
| Delta S' | (dNm) | 24,8 | 27,3 | 24,3 | 23,0 | 22,3 |
| TS 2 | (s) | 35 | 38 | 37 | 40 | 43 |
| T 50 | (s) | 112 | 117 | 114 | 120 | 125 |
| T 90 | (s) | 330 | 306 | 306 | 313 | 315 |
| T 95 | (s) | 431 | 387 | 390 | 396 | 396 |

| **MV Large Rotor: ML @ 100°C** | | | | | | |
|---|---|---|---|---|---|---|
| Mooney | MU | 100 | 62 | 81 | 60 | 47 |

The Mooney viscosity of the compound of Ex. 57 as well as the Mooney viscosity of the compounds of Ex 58-60 are significantly reduced compared to the compound of Ex. 56. Thus, significant reductions m compound viscosity can be obtained without the need for an additional plasticizer such as DIPLAST TM 8-10/ST. The compound Mooney is reduced by 20, 40 and 55 % by the addition of 10, 20 and 30 phr of ULV HNBR according to Example 7 , respectively.

**Table 41** shows the results from injection moulding trials using a Rheovulcameter with a ramification mould equipped.

**Table 41: Results from Injection Moulding Trials using a Rheovulcameter with a Ramification Mould Equiped for Examples 56 - 60**

| | **Ex. 56** | **Ex. 57** | **Ex. 58** | **Ex. 59** | **Ex. 60** |
|---|---|---|---|---|---|
| Fill (%) 50 bar | 5,7 | 13,9 | 9,1 | 13,9 | 24,3 |
| Fill (%) 97 bar | 23,8 | 47,8 | 34,3 | 58,8 | 84,7 |
| Internal Temp (°C) | 100 | 100 | 100 | 100 | 100 |
| Cure Temp. (°C) | 190 | 190 | 190 | 190 | 190 |

Examples 57-60 demonstrate the utility of using a specific low viscosity rubber component (Example 7) for injection moulding applications without the need for an additional plasticizer such as DIPLAST TM 8-10/ST. Specifically, examples 58-60 are compounds based on a blend of a high molecular weight HNBR C material (90, 80 and 70 phr respectively) and a low molecular weight HNBR material (10, 20 and 30 phr respectively, Example 7). To demonstrate the utility of these compounds for injection moulding, the vulcanizable compositions were tested using a Rheovulcameter (see Table 41). The vulcanizable compositions made with the addition of the low viscosity rubber component (Example 7) show much improved flow properties, which is observed by the increase in the filling percentage of the mould as the fraction of low viscosity material in the compound is increased. The % of filling of the mould for Ex. 59 is more than doubled compared to the comparative example 56.

**Table 42: Tensile and Compression Set Properties of cured articles obtained from vulcanizable compositions of Examples 56-60 (without DIPLAST^{®} TM 8-10/ST)**

| **Example** | | **Ex. 56** | **Ex. 57** | **Ex. 58** | **Ex. 59** | **Ex. 60** |
|---|---|---|---|---|---|---|
| **Tensile Properties (Cure @ 180°C, 15 min)** | | | | | | |
| M10 | MPa | 0,7 | 0,7 | 0,6 | 0,6 | 0,6 |
| M25 | MPa | 1,2 | 1,2 | 1,1 | 1 | 1 |
| M50 | MPa | 1,8 | 1,9 | 1,8 | 1,7 | 1,7 |
| M100 | MPa | 4,4 | 4,9 | 4,7 | 4,8 | 4,9 |
| EB | % | 290 | 250 | 281 | 275 | 257 |
| TS | MPa | 24,9 | 22,3 | 24,4 | 23,6 | 21,9 |
| Hardness | Sh. A | 66 | 66 | 64 | 64 | 62 |

| **Compression Set @ 150°C (Cure @ 180°C, 20 min)** | | | | | | |
|---|---|---|---|---|---|---|
| 3 days | % | 20 | 17 | 21 | 19 | 19 |
| 7 days | % | 27 | 26 | 28 | 27 | 26 |

These vulcanizable polymer compositions are only demonstrative formulations which can be used for seals or timing belts or any other applications for which improved flow properties are an advantage. Furthermore, these compositions demonstrate use of such a low viscosity polymer in such a vulcanizable blend composition without a low molecular weight process aid (eg. DIPLAST TM8-10/ST). Selected physical properties of the cured articles are given in Table 42.

Table 43 summarizes the results for the heat build up properties of cured articles obtained from the vulcanizable compositions of Examples 56 to 60. The heat build up properties of cured articles formed with HNBR of Example 7 show improved values compared to the comparative Example 56.

**Table 43:Heat Build Up of Cured Articles (Examples 56 to 60)**

| **Heat Build Up** | **Ex. 56** | **Ex. 57** | **Ex. 58** | **Ex. 59** | **Ex. 60** |
|---|---|---|---|---|---|
| Flowing (%) | -0,9 | -1,1 | -1,1 | -1,2 | -1,2 |
| Permanent Set (%) | 0,8 | 0,4 | 0,4 | 0,8 | 0,8 |
| Internal Temperature (°C) | 160 | 154 | 158 | 152 | 150 |
| Heat Build Up (°C) | 30 | 26 | 30 | 27 | 25 |

## Claims

1. A vulcanizable polymer composition comprising
(i) at least one optionally hydrogenated nitrile rubber having a weight average molecular weight M_{w} of 50,000 g/mol or less and a polydispersity index of less than 2.0 and
(ii) at least one cross-linking agent,
and additionally containing one or more hydrogenated nitrile rubber components (v) having a Mooney viscosity (ML 1+4 at 100°C) in the range of from 30 to 150 and a polydispersity index in the range of from 2.5 to 6.0,
wherein component(s) (i) is/are present in the range of from 8 to 50 wt.% and component(s) (v) is/are present in the range of from 92 to 50 wt.% wherein the aforementioned wt.% are always based on the sum of weight of both, i.e. component(s) (i) and component(s) (v).

2. The vulcanizable polymer composition according to claim 1 additionally comprising (iii) at least one filler.

3. The vulcanizable polymer composition according to claim 2 additionally comprising (iv) one or more further auxiliary compounds.

4. The vulcanizable polymer composition according to claim 3 comprising (iv) as further auxiliary compounds at least one vulcanization co-agent.

5. The vulcanizable polymer composition according to claim 4 wherein the vulcanization co-agent is selected from the group consisting of zinc acrylate, zinc diacrylate, zinc methacrylate, zinc dimethacrylate, trimethylolpropanetrimethacrylate (TRIM), butane-dioldimethacrylate BDMA), ethylenglycoldimethacrylate (EDMA), triallyl-isocyanurate (TAIC) and N,N'-1,3-phenylen-bismaleinimide.

6. The vulcanizable polymer composition according to claim 3 comprising one or more auxiliary products (iv) selected from the group consisting of reaction accelerators, vulcanization accelerators, vulcanization acceleration auxiliaries, antioxidants, foaming agents, anti-aging agents, heat stabilizers, light stabilizers, ozone stabilizers, processing aids, plasticizers, tackifiers, blowing agents, dyestuffs, pigments, waxes, extenders, organic acids, inhibitors, metal oxides, and activators.

7. The vulcanizable polymer composition according to any one of claims 1 to 6, wherein component (i) is either a copolymer of acrylonitrile and 1,3-butadiene or a hydrogenated copolymer of acrylonitrile and 1,3-butadiene.

8. The vulcanizable polymer composition according to any one of claims 1 to 7 additionally containing
(v) at least one hydrogenated nitrile rubber having a Mooney viscosity (ML 1+4 at 100°C) in the range of from 60 to 125, and a polydispersity index in the range of from 2.9 to 5.0.

9. The vulcanizable polymer composition according to claim 8, wherein the hydrogenated nitrile rubber has a polydispersity in the range of from 2.9 to 3.5.

10. A process for preparing a vulcanizable polymer composition according to claim 1 comprising mixing at least one component (i), at least one component (ii) and at least one hydrogenated nitrile rubber (v) having a Mooney viscosity (ML 1+4 at 100°C) in the range of from 30 to 150 and a polydispersity index in the range of from 2.5 to 6.0,.

11. The process according to claim 10 comprising additionally mixing at least one filler (iii) with at least one component (i) and at least one component (ii) and at least one hydrogenated nitrile rubber (v) having a Mooney viscosity (ML 1+4 at 100°C) in the range of from 30 to 150 and a polydispersity index in the range of from 2.5 to 6.0, and optionally one or more further auxiliary compounds (iv).

12. A process for preparing a vulcanizate comprising subjecting the vulcanizable polymer composition according to any one of claims 1 to 9 to vulcanization.

13. The process according to claim 12 comprising vulcanizing the vulcanizable polymer composition according to any one of claims 1 to 8 at a temperature in the range of from 80°C to 250°C, preferably of from 120°C to 220°C and more preferably of from 150°C to 200°C most preferably of from 165°C to 190°C.

14. The process according to claim 12 or 13 comprising performing the vulcanization via injection moulding, preferably liquid injection moulding, by transfer moulding or compression moulding.

15. A vulcanizate based on the vulcanizable polymer compositions according to any one of claims 1 to 9.

16. The vulcanizate according to claim 15 obtainable by the process according to any one of claims 12 to 14.

17. The vulcanizate according to any one of claims 15 or 16 having the form of a shaped article, preferably a seal, hose, bearing pad, stator, well head seal, valve plate, wire and cable sheathing, wheel roller, pipe seal, in place gaskets or footwear component. The vulcanizates in the form of said shaped articles are preferably prepared by injection moulding technology, more preferably liquid injection moulding, compression moulding, transfer moulding, pressure free curing or combinations thereof. Furthermore, the vulcanizable polymer composition is very well suited for wire and cable production, especially via extrusion processes. The present invention therefore further relates to vulcanizates obtainable by curing the novel low viscosity polymer compositions.

## Patentansprüche

1. Vulkanisierbare Polymerzusammensetzung, umfassend
(i) mindestens einen gegebenenfalls hydrierten Nitrilkautschuk mit einem gewichtsmittleren Molekulargewicht M_{w} von 50.000 g/mol oder weniger und einem Polydispersitätsindex von weniger als 2,0 und
(ii) mindestens einen Vernetzer,
und zusätzlich enthaltend eine oder mehrere hydrierte Nitrilkautschukkomponenten (v) mit einer Mooney-Viskosität (ML 1+4 bei 100°C) im Bereich von 30 bis 150 und einem Polydispersitätsindex im Bereich von 2,5 bis 6,0,
wobei die Komponente bzw. die Komponenten (i) im Bereich von 8 bis 50 Gew.-% vorliegt bzw. vorliegen und die Komponente bzw. die Komponenten (v) im Bereich von 92 bis 50 Gew.-% vorliegt bzw. vorliegen, wobei sich die obigen Gewichtsprozentangaben immer auf die Summe des Gewichts beider Komponenten, d.h. Komponente(n) (i) und Komponente(n) (v), beziehen.

2. Vulkanisierbare Polymerzusammensetzung nach Anspruch 1, zusätzlich umfassend
(iii) mindestens einen Füllstoff.

3. Vulkanisierbare Polymerzusammensetzung nach Anspruch 2, zusätzlich umfassend
(iv) eine oder mehrere weitere Hilfsverbindungen.

4. Vulkanisierbare Polymerzusammensetzung nach Anspruch 3, umfassend
(iv) als weitere Hilfsverbindungen mindestens ein Vulkanisations-Coagens.

5. Vulkanisierbare Polymerzusammensetzung nach Anspruch 4, wobei das Vulkanisations-Coagens aus der Gruppe bestehend aus Zinkacrylat, Zinkdiacrylat, Zinkmethacrylat, Zinkdimethacrylat, Trimetylolpropantrimethacrylat (TRIM), Butandioldimethacrylat (BDMA), Ethylenglycoldimethacrylat (EDMA), Triallylisocyanurat (TAIC) und N,N'-1,3-Phenylenbismaleinimid ausgewählt ist.

6. Vulkanisierbare Polymerzusammensetzung nach Anspruch 3, umfassend ein oder mehrere Hilfsprodukte (iv) aus der Gruppe bestehend aus Reaktionsbeschleunigern, Vulkanisationsbeschleunigern, Vulkanisationsbeschleunigungshilfsmitteln, Antioxidantien, Schäumungsmitteln, Alterungsschutzmitteln, Wärmestabilisatoren, Lichtschutzmitteln, Ozonschutzmitteln, Verarbeitungshilfsmitteln, Weichmachern, Tackifiern, Treibmitteln, Farbstoffen, Pigmenten, Wachsen, Streckmitteln, organischen Säuren, Verzögerern, Metalloxiden und Aktivatoren.

7. Vulkanisierbare Polymerzusammensetzung nach einem der Ansprüche 1 bis 6, wobei es sich bei Komponente (i) entweder um ein Copolymer von Acrylnitril und 1,3-Butadien oder um ein hydriertes Copolymer von Acrylnitril und 1,3-Butadien handelt.

8. Vulkanisierbare Polymerzusammensetzung nach einem der Ansprüche 1 bis 7, zusätzlich enthaltend (v) mindestens einen hydrierten Nitrilkautschuk mit einer Mooney-Viskosität (ML 1+4 bei 100°C) im Bereich von 60 bis 125 und einem Polydispersitätsindex im Bereich von 2,9 bis 5,0.

9. Vulkanisierbare Polymerzusammensetzung nach Anspruch 8, wobei der hydrierte Nitrilkautschuk eine Polydispersität im Bereich von 2,9 bis 3,5 aufweist.

10. Verfahren zur Herstellung einer vulkanisierbaren Polymerzusammensetzung nach Anspruch 1, bei dem man mindestens eine Komponente (i), mindestens eine Komponente (ii) und mindestens einen hydrierten Nitrilkautschuk (v) mit einer Mooney-Viskosität (ML 1+4 bei 100°C) im Bereich von 30 bis 150 und einem Polydispersitätsindex im Bereich von 2,5 bis 6,0 vermischt.

11. Verfahren nach Anspruch 10, bei dem man zusätzlich mindestens einen Füllstoff (iii) mit mindestens einer Komponente (i) und mindestens einer Komponente (ii) und mindestens einem hydrierten Nitrilkautschuk (v) mit einer Mooney-Viskosität (ML 1+4 bei 100°C) im Bereich von 30 bis 150 und einem Polydispersitätsindex im Bereich von 2,5 bis 6,0 und gegebenenfalls einer oder mehreren weiteren Hilfsverbindungen (iv) vermischt.

12. Verfahren zur Herstellung eines Vulkanisats, bei dem man die vulkanisierbare Polymerzusammensetzung nach einem der Ansprüche 1 bis 9 vulkanisiert.

13. Verfahren nach Anspruch 12, bei dem man die vulkanisierbare Polymerzusammensetzung nach einem der Ansprüche 1 bis 8 bei einer Temperatur im Bereich von 80°C bis 250°C, vorzugsweise von 120°C bis 220°C und weiter bevorzugt von 150°C bis 200°C, ganz besonders bevorzugt von 165°C bis 190°C, vulkanisiert.

14. Verfahren nach Anspruch 12 oder 13, bei dem man die Vulkanisation mittels Spritzgießen, insbesondere Flüssigkeitsspritzgießen, Spritzpressen oder Formpressen durchführt.

15. Vulkanisat auf Basis der vulkanisierbaren Polymerzusammensetzungen nach einem der Ansprüche 1 bis 9.

16. Vulkanisat nach Anspruch 15, das durch das Verfahren nach einem der Ansprüche 12 bis 14 erhältlich ist.

17. Vulkanisat nach einem der Ansprüche 15 oder 16 in der Form eines Formkörpers, vorzugsweise einer Dichtung, eines Schlauchs, eines Lagerelements, eines Stators, einer Bohrkopfdichtung, einer Ventilplatte, eines Draht- und Kabelmantels, eines Rads, einer Walze, einer Rohrdichtung, einer In-Place-Gasket-Dichtung oder einer Schuhwerkkomponente. Die Vulkanisate in der Form der Formkörper werden vorzugsweise durch Spritzguss-Technologie, weiter bevorzugt Flüssigkeitsspritzgießen, Formpressen, Spritzpressen, druckloses Härten oder Kombinationen davon hergestellt. Des Weiteren eignet sich die vulkanisierbare Polymerzusammensetzung sehr gut für die Herstellung von Drähten und Kabeln, insbesondere mittels Extrusionsverfahren. Die vorliegende Erfindung betrifft daher ferner Vulkanisate, die durch Härten der neuen niedrigviskosen Polymerzusammensetzungen erhältlich sind.

## Revendications

1. Composition de polymère vulcanisable comprenant
(i) au moins un caoutchouc nitrile éventuellement hydrogéné ayant une masse moléculaire moyenne en poids M_{w} de 50 000 g/mol ou moins et un indice de polydispersité de moins de 2,0 et
(ii) au moins un agent de réticulation,
et contenant en plus un ou plusieurs composants de type caoutchouc nitrile hydrogéné (v) ayant une viscosité Mooney (ML 1+4 à 100°C) dans la fourchette de 30 à 150 et un indice de polydispersité dans la fourchette de 2,5 à 6,0,
dans laquelle le(s) composant(s) (i) est/sont présent(s) dans la fourchette de 8 à 50 % en poids et le (s) composant (s) (v) est/sont présent (s) dans la fourchette de 92 à 50 % en poids, les % en poids susmentionnés étant toujours rapportés à la somme des poids des deux composants, à savoir du ou des composant (s) (i) et composant (s) (v).

2. Composition de polymère vulcanisable selon la revendication 1 comprenant en plus
(iii) au moins une charge.

3. Composition de polymère vulcanisable selon la revendication 2 comprenant en plus
(iv) un ou plusieurs autres composés auxiliaires.

4. Composition de polymère vulcanisable selon la revendication 3 comprenant (iv) comme autres composés auxiliaires au moins un co-agent de vulcanisation.

5. Composition de polymère vulcanisable selon la revendication 4 dans laquelle le co-agent de vulcanisation est choisi dans le groupe constitué par l'acrylate de zinc, le diacrylate de zinc, le méthacrylate de zinc, le diméthacrylate de zinc, le triméthacrylate de triméthylolpropane (TRIM), le diméthacrylate de butanediol (BDMA), le diméthacrylate d'éthylèneglycol (EDMA), l'isocyanurate de triallyle (TAIC) et le N,N'-1,3-phénylène-bismaléinimide.

6. Composition de polymère vulcanisable selon la revendication 3 comprenant un ou plusieurs produits auxiliaires (iv) choisis dans le groupe constitué par les accélérateurs de réaction, les accélérateurs de vulcanisation, les auxiliaires d'accélération de la vulcanisation, les antioxydants, les agents moussants, les agents anti-vieillissement, les stabilisants à la chaleur, les stabilisants à la lumière, les stabilisants à l'ozone, les adjuvants de fabrication, les plastifiants, les agents donnant du collant, les agents gonflants, les colorants, les pigments, les cires, les diluants, les acides organiques, les inhibiteurs, les oxydes métalliques et les activateurs.

7. Composition de polymère vulcanisable selon l'une quelconque des revendications 1 à 6, dans laquelle le composant (i) est un copolymère d'acrylonitrile et de 1,3-butadiène ou bien un copolymère d'acrylonitrile et de 1,3-butadiène hydrogéné.

8. Composition de polymère vulcanisable selon l'une quelconque des revendications 1 à 7 contenant en plus (v) au moins un caoutchouc nitrile hydrogéné ayant une viscosité Mooney (ML 1+4 à 100°C) dans la fourchette de 60 à 125, et un indice de polydispersité dans la fourchette de 2,9 à 5,0.

9. Composition de polymère vulcanisable selon la revendication 8, dans laquelle le caoutchouc nitrile hydrogéné possède une polydispersité dans la fourchette de 2,9 à 3,5.

10. Procédé de préparation d'une composition de polymère vulcanisable selon la revendication 1 comprenant le mélange d'au moins un composant (i), d'au moins un composant (ii) et d'au moins un caoutchouc nitrile hydrogéné (v) ayant une viscosité Mooney (ML 1+4 à 100°C) dans la fourchette de 30 à 150 et un indice de polydispersité dans la fourchette de 2,5 à 6,0.

11. Procédé selon la revendication 10 comprenant en plus le mélange d'au moins une charge (iii) avec au moins un composant (i) et au moins un composant (ii) et au moins un caoutchouc nitrile hydrogéné (v) ayant une viscosité Mooney (ML 1+4 à 100°C) dans la fourchette de 30 à 150 et un indice de polydispersité dans la fourchette de 2,5 à 6,0, et éventuellement un ou plusieurs autres composés auxiliaires (iv).

12. Procédé de préparation d'un vulcanisat comprenant le fait de soumettre la composition de polymère vulcanisable selon l'une quelconque des revendications 1 à 9 à une vulcanisation.

13. Procédé selon la revendication 12 comprenant la vulcanisation de la composition de polymère vulcanisable selon l'une quelconque des revendications 1 à 8 à une température dans la fourchette de 80°C à 250°C, de préférence de 120°C à 220°C et de façon plus préférée de 150°C à 200°C, de façon la plus préférée de 165°C à 190°C.

14. Procédé selon la revendication 12 ou 13 comprenant le fait de réaliser la vulcanisation par moulage par injection, de préférence par moulage par injection de liquide, par moulage par transfert ou par moulage par compression.

15. Produit de vulcanisation à base des compositions de polymère vulcanisables selon l'une quelconque des revendications 1 à 9.

16. Produit de vulcanisation selon la revendication 15 susceptible d'être obtenu par le procédé selon l'une quelconque des revendications 12 à 14.

17. Produit de vulcanisation selon l'une quelconque des revendications 15 ou 16 ayant la forme d'un article façonné, de préférence d'un joint, d'un tuyau, d'un patin de support, d'un stator, d'un joint de tête de puits, d'une plaque porte-soupape, d'un gainage de fil et de câble, d'un galet de roue, d'un joint de tube, de joints d'étanchéité en place ou d'un composant d'articles chaussants. Les produits de vulcanisation ayant la forme desdits articles façonnés sont de préférence préparés par une technique de moulage par injection, plus préférablement par moulage par injection de liquide, moulage par compression, moulage par transfert, durcissement sans pression ou des combinaisons de ceux-ci. En outre, la composition polymère vulcanisable est très bien adaptée pour la production de fils et de câbles, en particulier par le biais de processus d'extrusion. La présente invention concerne par conséquent en outre des produits de vulcanisation pouvant être obtenus en durcissant les compositions polymères à base viscosité de l'invention.
